# Europäisches Patentamt

## European Patent Office

## Office européen des brevets

(11) Veröffentlichungsnummer: **0 210 271 B1**

(12) **EUROPÄISCHE PATENTSCHRIFT**

(45) Veröffentlichungstag der Patentschrift: **09.05.90**

(51) Int. Cl.⁵: **F 16 L 11/11**

(21) Anmeldenummer: **86901831.7**

(22) Anmeldetag: **01.02.86**

(86) Internationale Anmeldenummer:
**PCT/EP86/00049**

(87) Internationale Veröffentlichungsnummer:
**WO 86/04660 14.08.86 Gazette 86/18**

(54) **BIEGBARES WELLROHR MIT ZUEINANDER PARALLELEN, RINGFÖRMIGEN WELLEN UND AXIALABSTÜTZUNG.**

(30) Priorität: **04.02.85 DE 3503689**
**22.06.85 DE 3522334**
**18.12.85 DE 3544884**

(43) Veröffentlichungstag der Anmeldung:
**04.02.87 Patentblatt 87/06**

(45) Bekanntmachung des Hinweises auf die
Patenterteilung:
**09.05.90 Patentblatt 90/19**

(84) Benannte Vertragsstaaten:
**AT CH DE FR GB LI**

(56) Entgegenhaltungen:
**FR-A-2 080 195**
**GB-A-2 015 689**
**US-A-2 707 117**
**US-A-2 748 803**

(73) Patentinhaber: **Witzenmann GmbH**
**Metallschlauch-Fabrik Pforzheim**
**Östliche Karl-Friedrich-Strasse 134**
**D-7530 Pforzheim (DE)**
(84) **CH DE FR GB LI AT**

(73) Patentinhaber: **MAN Technologie**
**Aktiengesellschaft**
**Dachauer Strasse 667**
**D-8000 München 50 (DE)**
(84) **DE**

(72) Erfinder: **GRÖNERT, Heinz**
**Heinrich-Feller-Strasse 5**
**D-8080 Emmering (DE)**
Erfinder: **BENISCH, Johann**
**Hechendorfstrasse 134**
**D-8036 Herrsching (DE)**
Erfinder: **PICHLER, Johann**
**Hauptstrasse 48**
**D-8069 Steinkirchen (DE)**
Erfinder: **GROPP, Reinhard**
**In der Laier 17**
**D-7540 Neuenbürg-Arnbach (DE)**

(74) Vertreter: **Lemcke, Rupert, Dipl.-Ing. et al**
**Patentanwälte Dipl.-Ing. R. Lemcke Dr.-Ing. H.J.**
**Brommer Bismarckstrasse 16 Postfach 4026**
**D-7500 Karlsruhe 1 (DE)**

# Beschreibung

Die Erfindung betrifft ein biegbares Wellrohr mit zueinander parallelen, ringförmigen Wellen, endständigen Anschlußteilen und diese gegen axiale Abstandsänderung haltenden, mit den Anschlußteilen in Zug- und/oder Druckrichtung fest verbundenen Längsstützmitteln, gegen die das Wellrohr wenigstens mittelbar abgestützt ist.

Soweit bei dieser Gattung der Begriff "ringförmig" verwendet ist, ist darunter nicht nur eine kreisringförmige Ausbildung zu verstehen, sondern ebenso beispielsweise ein Wellrohr mit ovalem oder ähnlichem Querschnitt. Soweit von einer Halterung gegen axiale Abstandsänderung gesprochen ist, ist dies nicht im absoluten Sinne zu verstehen, sondern unter Einschluß unvermeidbarer Elastizitäten etc., wobei jedoch mit Hilfe der Längsstützmittel versucht wird, axiale Abstandsänderungen so weit wie möglich zu unterbinden.

Die gattungsgemäßen Wellrohre, die auch als Bälge bezeichnet werden, bestehen in der Regel aus Metall. Je nach Anwendungsfall kommen jedoch auch andere Materialien, insbesondere Kunststoff in Frage. Die Wellrohre dienen üblicherweise der biegbaren Verbindung zweier medienführender Teile, an die sie angeschlossen sind. Wenn das Medium einen Überdruck aufweist, versucht das Wellrohr bekanntermaßen, seine Länge zu vergrößern, so daß es erforderlich ist, durch zusätzliche Mittel den axialen Längenabstand der Wellrohranschlußteile zu halten und das Wellrohr gegen Ausknicken bzw. seitliches Ausbrechen zu stützen.

Dazu verwendet man eine Stahldrahtumflechtung des Wellrohres, die mit den Anschlußteilen fest verbunden ist. Ein solcher äußerer Geflechtsschlauch verringert bei Längenvergrößerung seinen Durchmesser, was ihm jedoch durch Anlage an den Wellschlauch nicht möglich ist, so daß er die Wellrohranschlußteile gegen Abstandsänderungen stützt.

Die Berührung zwischen Wellschlauch und Geflechtsschlauch führt nun aber zu einer erheblichen tribologischen Beanspruchung dieser beiden Teile, die die erreichbare Lastspielzahl bei Biegebeanspruchung erheblich herabsetzt. Im wesentlichen ergibt sich eine verschleißbedingte Wanddickenreduktion oder Kerbenbildung an den Außenkrempen des Wellrohres, eine verschleißbedingte Verringerung des Geflechtsdrahtdurchmessers sowie eine reibungsbedingte Veränderung von Biegelinie und neutraler Biegefaser des Bauteiles mit der Folge seiner lokalen Überbeanspruchung.

Um die geschilderten Nachteile umflochtener Wellschläuche zu verringern, sind zahlreiche Bemühungen zur Herabsetzung der tribologischen Beanspruchung der Paarung Wellschlauch/Geflechtsschlauch unternommen worden. Diese bestehen im wesentlichen in der Verwendung von Schmierstoffen, geeigneter Materialwahl durch Verwendung von Material mit Gleitlagereigenschaften, passender Oberflächengestaltung in den Paarungsbereichen sowie Zwischenlage von für den Verbrauch durch Verschleiß vorgesehenen Opfermaterialien. (DE—C—25 27 986, DE—C—25 29 508). All diese Bemühungen bringen zwar eine erhebliche Verbesserung, schaffen jedoch keine Lebensdauer, die auch nur annähernd an die Lebensdauer unter Biegewechselbeanspruchung heranreichen würde, die beispielsweise ein Wellschlauch ohne Geflechsummantlung hat.

Durch die US—A—2 707 117 ist ein Kompensator für Rohrleitungen bekannt, bei dem zwischen Anschlußflanschen ein Wellrohr angeordnet ist, in dessen Wellen Verstärkungsringe aus Metall eingesetzt sind, die der Abstützung der auf das Wellrohr ausgeübten Druckkräfte dienen und außerdem durch Anlage an die benachbarten Wellenflanken die Auslenkung des Wellrohres begrenzen. Zur weiteren Steuerung dieser Auslenkung ist—bezogen auf die Länge des Wellrohres—der mittlere Verstärkungsring an Zugankern geführt, die die Anschlußflansche des Wellrohres auf beiden Seiten im Bereich einer Längsmittelebene miteinander verbinden. Die Zuganker sind jedoch starre Stangen, die eine Abstützung des Wellrohres über die Anlenkung weiterer Verstärkungsringe nicht erlauben, da sonst die Funktion des Wellrohres als Ausgleichselement verloren ginge. Damit erlaubt die bekannte Bauform nur eine Abstützung des Wellrohres auf der Mitte seiner Länger zwischen den Anschlußflanschen.

Die GB—A—2 015 689 zeigt die Aneinanderkopplung von glattwandigen Schlauchstücken durch ringförmige Verbindungselemente, die parallel zu dem so gebildeten Leitungselement an gleichmäßig über den Umfang verteilten Seilen aufgefädelt sind. Hier haben wegen der glattwandigen Ausbildung der Schlauchstücke die Seile keine bevorzugte Aufgabe als Längsstützmittel gegen eine Innendruckbelastung der Leitung, vielmehr dienen sie nur als schlaffe Führung.

Aufgabe der Erfindung ist es daher, ein Wellrohr der eingangs genannten Art derart auszubilden, daß eine tribologische Beanspruchung sämtlicher ihn bildenden Bauteile praktisch vollständig ausgeschaltet ist, jedes Teil also ohne reibungs- und damit verschleißbedingte Beeinträchtigung durch die anderen Teile hinsichtlich der aufzunehmenden Belastung, insbesondere der Biegewechselbeanspruchung seine eigene volle Lebensdauer erreichen kann. Die zur Erlangung des Zieles zu ergreifenden Maßnahmen sollen das Wellrohr hinsichtlich seiner Gestehungskosten nicht beeinträchtigen vielmehr eher günstiger gestalten, indem bisher verschleißbedingte Zusatzmaßnahmen in Form weiterer Bauteile, Materialzugaben etc. in Fortfall kommen können.

Die Aufgabe ist erfindungsgemäß dadurch gelöst, daß das Längsstützmittel wenigstens ein flexibles, sich im wesentlichen parallel zum Wellrohr erstreckendes Seil ist, daß die radiale Relativlage zwischen wellrohr und Seil durch das Seil erfassende, in Abständen über die Wellrohrlänge verteilt angeordnete Abstandhalter gegeben ist und daß das Wellrohr in Radialrichtung durch das Seil geführt ist.

Hierbei sein zunächst festgehalten, daß der Begriff "flexibles Seil" aus Gründen der Vereinfachung stellvertretend gewählt ist für alle hier in Frage kommenden, in ihrer Längsrichtung eine Kraftaufnahme ermöglichenden Teile. So kann das Seil in Draht- oder Faserbündel sein, eine biegbare Stange, ein Bande oder Bandpaket, eine Gliederkette, eine gelenkige Aneinanderreihung von stabförmigen Kettengliedern, die auch für sich selbst biegesteif sein können, etc.

Durch die erfindungsgemäßen Maßnahmen ist zunächst gewährleistet, daß das Seil oder die Seile den in Längsrichtung des Wellrohres vorgegebenen Abstand der Anschlußteile des Wellrohres gewährleisten. Dies wird am einfachsten deutlich für den Fall, daß das oder die Seile in der neutralen Biegeebene des Wellrohres angeordnet sind, als eine solche Lage haben, bei der unabhängig vom Biegewinkel des Wellrohres eine Längenänderung nicht eintritt. Es werden jedoch nachfolgend auch Beispiele dafür gegeben, die eine Anordnung außerhalb der neutralen Biegeebene möglich machen.

Wird das Seil oder werden die Seile ausschließlich in der neutralen Biegeebene gebogen, ergeben sich hier jedoch auch keine Relativbewegungen gegenüber dem Wellschlauch weder in Längsrichtung noch in Umfangsrichtung, so daß es auch grundsätzlich nicht zu Reibung und Verschleiß kommen kann, wie dies bei den bekannten Metalldrahtumflechtungen in allen Bereichen außerhalb der neutralen Biegeebene der Fall ist.

Damit nun das Seil oder die Seile ihre gewünschte Relativlage zum Wellrohr insbesondere ihre Lage in der neutralen Biegeebene bei allen Wellrohrbewegungen beibehalten, sind die das Seil oder die Seile erfassenden Abstandhalter vorgesehen, denen gegenüber das Seil oder die Seile gleichermaßen keine verschleißverursachenden Relativbewegungen ausführen. Dabei ist nach einem weiteren Merkmal der Erfindung dafür gesorgt, daß das Wellrohr in Radialrichtung durch das Seil oder die Seile unmittelbar oder mittelbar geführt ist, so daß es durch das Seil oder die Seile gegen Ausknicken bzw. seitliches Ausbrechen gehalten ist, wobei, wie aus dem Nachfolgenden deutlich werden wird, auch gegenüber dem Wellrohr durch die übrigen Bauteile eine Reibung und Verschleiß verursachende Relativbewegung nicht stattfindet, so daß das Wellrohr, um dessen Halterung es letztendlich geht, ohne irgendeine Beeinträchtigung seine volle Lebensdauer unter Biegewechselbeanspruchung erreichen kann.

Durch die Erfindung ist schließlich eine gleichmäßige Verteilung der sich durch das Biegen des Wellrohres ergebenden Bewegungen auf die gesamte Wellrohrlänge erreicht, da—verglichen mit dem bekannten Fall der Metallumflechtung—keine lokalen, reibungsbedingten Hemmnisse auftreten können, die das Wellrohr örtlich an seiner freien Bewegbarkeit und einer gleichmäßigen Bewegungsverteilung auf die gesamte Wellrohrlänge hindern könnten.

Der Gegenstand der Erfindung eignet sich außerdem nicht nur zur Anwendung auf innendruckbelastete Wellrohr, die ihre Länge unter Druckbelastung zu vergrößern suchen, wenn auch hier das hauptsächliche Anwendungsgebiet liegt. Vielmehr ist auch die Anwendung auf außendruckbelastete Wellrohre möglich, die entsprechend ihre Länge zu verringern suchen. Allerdings sind hier von der Höhe der Druckbelastung her gesehen Grenzen gesetzt, die sich im wesentlichen aus der Knickbelastbarkeit des Seiles oder der Seile sowie der Gesamtlänge der Wellrohrkonstruktion ergeben. Denkt man sich jedoch beispielsweise Seile in Form von Biegestäben, so wird deutlich, daß diese in Verbindung mit der durch die Abstandhalter gegebenen Führung auch in brauchbaren Bereichen eine Druckbelastung aufnehmen können.

Es besteht die Möglichkeit, das Seil konzentrisch zur Wellrohrachse anzuordnen. Hiermit ist eine allseitige Biegbarkeit des Wellrohres gewährleistet da das Seil immer in der neutralen Beigeebene liegt.

Werden mehrere Seile vorgesehen, so ist es zweckmäßig, dies symmetrisch um die Wellrohrachse verteilt anzuordnen, wobei insbesondere bei zwei Seilen deren Anordnung in der neutralen Biegeebene der Vorzug zu geben ist.

Für den Fall eines konzentrisch zur Wellrohrachse angeordneten Seiles können die Abstandhalter in die Schlauchwellen ein- und/oder auf diese aufgesetzte, das Seil an ihrer Mitte erfassende Querstege, -kreuze od. dgl. sein durch die das Seil in seiner konzentrischen Position gehalten wird und die das Wellrohr am Seil abstützen bzw. über die das Wellrohr gegen seitliches Ausknicken am Seil "aufgehängt" ist.

Dabei kann vorgesehen sein, daß die Querstege sich im wesentlichen zwischen zwei einander diametral gegenüberliegenden Bereichen des Wellrohres erstrecken und daß in Längsrichtung des Wellrohres benachbarte Querstege gegeneinander um 90° verdreht angeordnet sind. Diese besondere Ausbildung, bei der natürlich für die Aufrechterhaltung der Winkellage der Querstege gesorgt sein muß, dient im wesentlichen der Montageerleichterung, indem die Querstege durch leichtes Schrägstellen gegenüber der Querrichtung des Seiles in den Innenquerschnitt des Rohres eingeführt und dort an Ort und Stelle aufgerichtet werden könne, womit sich dann die Eingriffsverbindung gegenüber der Profilierung des Wellrohres herstellt. Um dieses Abkippen der Querstege gegenüber dem Seil noch zu erleichtern, können vorteilhafterweise die Querstege das Seil unter Belassung eines Spieles erfassen, wobei dieses Spiel so gewählt werden kann, daß einerseits eine genügende Kippbarkeit der Querstege gewährleistet ist, andererseits aber auch die konzentrische Führung des Seiles nicht nachteilig beeinflußt wird.

Sind innerhalb des Wellrohres zwei oder mehrere Seile angeordnet, so können zwischen diesen sie mit ihren Enden erfassende, gegen Verschiebung in Axialrichtung gesicherte Querstege als Abstandhalter angeordnet sein. Diese können sich im Falle von in der neutralen Biegeebene angeordneten Seilen durch den Wellrohrquerschnitt erstrecken, wobei dies diametral geschehen kann, aber auch die Möglichkeit besteht, daß die Querstege halbbogenförmig ausgebildet und in die Schlauchwellen ein- bzw. auf diese gegen Verschiebung in Achsrichtung des Wellrohres gesichert aufgesetzt sind. Die genannten, sich diametral erstreckenden Querstege können beispielsweise durch auf die Seile aufgesteckte Distanzhülsen gegen axiales Verschieben gesichert werden.

In beiden Fällen können, die Seile radial außen gegen die Innenkontur des Wellrohres in Anlage sein. Es besteht jedoch auch die Möglichkeit, daß zwischen Seilen und Wellrohrwandung Distanzstücke zur radialen Abstandsbildung eingesetzt sind, wobei die Distanzstücke durch die Querstege gebildet sein können.

Bei einer anderen Bauform mit innerhalb des Schlauchquerschnittes angeordneten Seilen kann vorgesehen sein, daß die Abstandhalter außenzylindrische Ringe sind, deren Außenkontur vorzugsweise geringfügig kleiner als die Innenkontur des Wellrohres ist, und daß die Ringe mit gegenseitigem Abstand gegen Axialverschiebung gesichert auf das Seil oder die Seile aufgesetzt sind. Dabei kann der gegenseitige Abstand der Ringe durch auf dem Seil oder den Seilen zwischen den Ringen angeordnete Distanzstücke od. dgl. gesicherrt sein. Bei dieser Bauform wird also innerhalb des Wellrohres ein gliederförmiger Zylinder aufgebaut, dessen Außenkontur ggf. mit geringfügigem Abstand der Innenkontur des Wellrohres entspricht. Durch den gegenseitigen Axialabstand der den gleiderförmigen Zylinder bildenden Ringe ist die Beigbarkeit des Wellrohres bestimmt bzw. begrenzt, wobei andererseits aber jede tribologische Beanspruchung zwischen Wellrohrinnenseite und Außenseite der Ringe vermieden ist.

Die vorstehenden Beispiele zeigen bereits, daß das erfindungsgemäße Prinzip darauf beruht, dem Wellrohr eine Stützkonstruktion zuzugeben, die so aufgebaut und beweglich ist, daß sich bei Biegebewegungen des Wellrohres keine Relativbewegung zwischen den Teilen der Stützkonstruktion und dem Wellrohr ergibt, so daß folglich auch tribologische Belastungen nicht auftreten können.

Bisher wurden Lösungsformen nach der Erfindung angesprochen, bei denen Seile und Abstandhalter innerhalb des Wellrohrquerschnittes untergebracht sind. Damit verbindet sich natürlich eine Verringerung des freien Wellrohrquerschnittes, die störend wirken kann. Daher sei nun auf Bauformen eingegangen, bei denen zwei oder mehrere Seile außerhalb des Wellrohres angeordnet sind. Dabei sind die Seile zweckmäßig wieder in der neutralen Biegeebene angeordnet. Dies ist jedoch grundsätzlich nicht immer nötig. Vielmehr werden auch Bauformen angegeben, die von dieser Voraussetzung nicht Gebrauch machen müssen.

Im Falle außerhalb des Wellrohres angeordneter Seile sind die Abstandhalter erfindungsgemäß als den Schlauch und die Seile unverlierbar umfassende Ringe order Ringsegmente ausgebildet. Diese Ringe oder Ringsegmente können in die Schlauchwellen ein- oder auf diese gegen Verschiebung in Achsrichtung des Wellrohres gesichert aufgesetzt sein, wobei sie die axiale Verschiebesicherung der aufgesetzten Ringe durch Anpassung deren Profilierung an die gegenüberliegende Wellrohrprofilierung erreichen läßt. In jedem Falle sorgen die Abstandhalter für eine definierte Halterung von Schlauch und Seilen gegeneinander, ohne daß zwischen den einzelnen Bauteilen Reibung auftreten kann, so daß tribologische Beanspruchungen mit den daraus nach dem Stand der Technik resultierenden Folgen vermieden werden.

Die Ringe oder Ringsegmente können selbsttragend (steif) ausgebildet sein. Es besteht jedoch auch die Möglichkeit, daß die Ringe oder Ringsegmente als schlaffe Umschlingungsmittel ausgebildet sind, wobei in beiden Fällen zwischen Seilen und Wellrohr Distanzstücke zur radialen Abstandsbildung eingesetzt sein können. Auch hier besteht die Möglichkeit, daß die Distanzstücke durch die Ringe oder Ringsegmente selbst gebildet sind.

Nach einer anderen Bauform kann auch hier vorgesehen sein, daß bei zwei Seilen die Ringe oder Ringsegmente innenzylindrisch sind, wobei ihre Innenkontur vorzugsweise geringfügig größer als die Außenkontur des Wellrohres ist, und daß die Ringe bzw. Ringsegmente mit gegenseitigem Abstand gegen Axialverschiebung gesichert auf die Seile aufgesetzt sind. Dabei kann der gegenseitige Abstand der Ringe beispielsweise durch auf den Seilen zwischen den Ringen angeordnete Distanzstücke od. dgl. gesichert sein. Ähnlich wie bei der entsprechenden, vorstehend beschriebenen Konstruktion für das Wellrohrinnere ist hier um den Schlauch ein gliederförmiger Kanal geschaffen, dessen Innenquerschnitt ggf. mit geringfügiger Distanz dem Außenquerschnitt des Wellrohres entspricht und innerhalb dessen das Wellrohr an sich axial frei bewegbar ist. Die Biegbarkeit dieses gliederförmigen Kanals und damit des Wellrohres ist durch den gegenseitigen axialen Abstand der Ringe gegeben, wobei auch hier bei Biegebewegungen Relativbewegungen zwischen den Ringen des Gliederkanales einerseits und dem Wellrohr andererseits unterbunden sind.

Was die vorstehend angesprochenen Ringsegmente betrifft, so ist es grundsätzlich nicht erforderlich, daß durch diese ein voller Wellrohrumfang zusammengesetzt ist. Vielmehr besteht beispielsweise auch die Möglichkeit, daß abweckselnd nebeneinander gegenläufig halbkreisförmig ausgebildete Ringsegmente angeordnet sind.

Wird durch die Ringsegmente ein voller Umschlingungsbogen um Wellrohr gebildet, so können benachbarte Enden einander zugeordneter Ringsegmente durch Schweißen, Formschluß, aufgesetzte Klemmstücke od. dgl. Fügeverfahren miteinander verbunden sein. Außerdem können bei zahlreichen der vorgenannten Konstruktionen die Ringe oder Ringsegmente scheibenförmig ausgebildet sein, sie können jedoch auch durch Draht od. dgl. mit Kreisquerschnitt gebildet sein.

Nach einer anderen erfindungsgemäßen Bauform im Rahmen des vorstehenden Lösungsgedankens kann vorgesehen sein, daß in Achsrichtung des Wellrohres mittig zwischen benachbarten Ringen oder Ringsegmenten weitere ringförmige oder ringsegmentförmige Halteelemente angeordnet sind, daß diese diametral zur Wellrohrachse einander gegenüberliegende Seile in einem gegenüber den Ringen oder Ringsegmenten größeren radialen Abstand zur Wellrohrachse umfassen und halten, daß die Innenkontur der Halteelemente einen Abstand gegenüber der radial benachbarten Wellrohrwandung aufweist, und daß die Halteelemente gegen Bewegung in Achsrichtung des Wellrohres gesichert sind, zu welch letzterem die Halteelemente mit den Seilen fest verbunden sein können—was im übrigen auch bei den anderen, vorher beschriebenen Bauformen der Fall sein kann—oder wozu die Halteelemente teilweise in ein radial benachbartes Wellental des Wellrohres eingetaucht sein können. Sind bei dieser vorbeschriebenen Bauform vier Seile symmetrisch um die Wellrohrachse angeordnet, so können Halteelementpaare vorgesehen sein, deren eines Halteelement gegenüber dem anderen um 90° versetzte Seile umfaßt und hält, wobei jedes Halteelement gegenüber den von ihm nicht erfaßten Seilen radial zur Wellrohrachse frei beweglich ist. Auch hier besteht die Möglichkeit, daß die Halteelemente scheibenförmig ausgebildet sind.

Bei dieser Lösung nach der Erfindung verlaufen die Seile wellenförmig mit wechselndem radialem Abstand gegenüber dem Wellrohr, was zur Folge hat, daß das Wellrohr in jede beliebige Richtung gebogen werden kann, da sich bei Seilen, die außerhalb der neutralen Biegeebene liegen, die Halteelemente radial gegenüber dem Wellrohr verlagern können, so daß ein auf der Biegungsaußenseite des Wellrohres angeordnetes Seil sich unter Glättung seines wellenförmigen Verlaufes im Sinne einer Abstandsvergrößerung der Wellrohr anschlußteile "längen" kann, während ein diametral gegenüberliegendes Seil durch die radiale Verschiebung der Halteelemente zu einem stärker wellenförmigen Verlauf und damit zu einer "Verkürzung" gebracht wird. Dies alles geschieht jedoch, ohne daß es zwischen den vorhandenen Bauteilen zu einer nennenswerten Reibung kommen muß. Eine leichte Reibung könnte allenfalls zwischen den Halteelementen und den Wellenflanken des Wellrohres auftreten, wenn die Halteelemente durch diese Wellenflanken gegen axiale Verschiebung gesichert sind. Sind jedoch die Halteelemente mit den Seilen fest verbunden, so kann auch diese geringfügige Reibung vermieden werden, da eine Berührung zwischen den Halteelementen und dem Wellrohr für die Funktion des beschriebenen Gegenstandes nicht erforderlich ist.

Was die Verbindung der Seile mit den Anschlußteilen des Wellrohres betrifft, so kann diese natürlich endgültig bzw. unlösbar ausgebildet sein. Zweckmäßig ist es jedoch, daß die Seile an den Wellrohranschlußteilen lösbar und bezüglich ihrer Länge ggf. nachstellbar befestigt sind, wodurch der axiale Abstand der Anschlußteile entsprechend örtlichen Gegebenheiten eingesellt werden kann. Von Vorteil ist es dabei ferner, daß die Seile an den Wellrohranschlußteilen zumindest in Grenzen schwenkbar befestigt sind, damit es an diesen Verbindungsstellen nicht zu einer Knickbelastung für die Seile kommen kann. Dem gleichen Ziele dient es, wenn zusätzlich vorgesehen ist, daß die Seile die Abstandhalter über aufgesetzte Hülsen od. dgl. durchqueren.

Sämtliche erfindungsgemäßen Lösungen zeichnen sich, wie gesagt, dadurch aus, daß die verwendeten Bauteile einer tribologischen Belastung nicht ausgesetzt sind. Auch haben die Seile, Abstandhalter, Ringe und Bindeglieder keine Aufgabe bzw. Funktion bezüglich des vom Wellrohr aufzunehmenden Innen- bzw. Außendruckes. Vielmehr dienen sie lediglich der Abstützung der Reaktionskräfte in Achsrichtung, die sich aus der Innen- bzw. Außendruckbelastung des Wellrohres ergeben, sowie der Abstützung des Schlauches gegen seitliches Ausbrechen. Es hat sich gezeigt, daß die Lebensdauer des erfindungsgemäßen Wellrohres bezüglich Biegewechselbeanspruchungen wesentlich größer ist als die der eingangs beschriebenen, bekannten Bauformen, wobei sich schon eine Lebensdauererhöhung im Größenordnungsbereich von mehreren Zehnerpotenzen gezeigt hat.

Weitere wesentliche Merkmale und Einzelheiten der Erfindung ergeben sich aus der nachfolgenden Beschreibung von Ausführungsformen, die auf der Zeichnung dargestellt sind. In der Zeichnung zeigen:

Fig. 1 und 2 die teilweise geschnittene Seiten- und Axialansicht eines Schlauches mit äußerer und eines Schlauches mit innerer Abstützung;

Fig. 3 bis 5 Varianten der grundsätzlich anhand der Fig. 1 gezeigten Bauform;

Fig. 6 und 7 Varianten der grundsätzlich anhand der Fig. 2 gezeigten Bauform;

Fig. 8 bis 12 Ausführungen einer Einzelheit aus Fig. 1 in teilweiser Axialansicht;

Fig. 13 bis 15 Ausführungsformen einer weiteren Einzelheit aus Fig. 1 in teilweiser radialer Schnittdarstellung und Axialansicht;

Fig. 16 eine Variante der Bauform gemäß Fig. 1, deren Prinzip auch auf die Bauform gemäß Fig. 2 übertragbar ist;

Fig. 17 bis 21 eine Variante gemäß Fig. 1 und deren Einzelheiten in verschiedenen Darstellungen und

Fig. 22 und 23 eine besondere Bauform in Seiten- und Schnittansicht gemäß der Schnittlinie VI—VI in Fig 22.

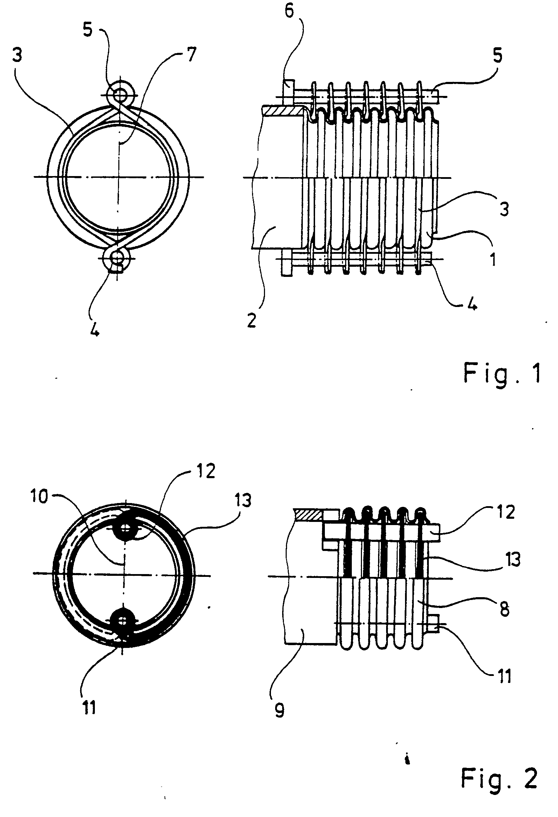

Fig. 1 zeigt rechts in teilweiser Schnittdarstellung die Seitenansicht eines Wellschlauches 1, der von einem Anschlußteil 2 ausgeht. Ein ebensolches Anschlußteil muß man sich auf der rechten Seite am Schlauchende vorstellen, wobei dort die Konstruktion im übrigen genau der Darstellung des linken Schlauches entspricht.

In die Wellentäler des Ringwellschlauches 1 sind Abstandhalter 3 eingesetzt, die den Schlauch umschlingen und ebenso zwei auf gegenüberliegenden Seiten des Schlauches zu diesem parallel verlaufende Seile 4 und 5, bei der 6 an den Anschlußteilen 2 des Schlauches 1 befestigt sind.

Die Seile 4 und 5 liegen in der neutralen Beigeebene des Schlauches, die bei dessen in Fig 1 linker Ansicht mit der Ziffer 7 versehen ist. Diese Anordnung in der neutralen Biegeebene bedeutet, daß bei einer Biegung des Schlauches entlang dieser Ebene die Seile 4 und 5 in geometrischer Hinsicht einer reinen Biegebeanspruchung ausgesetzt sind, indem die einzelnen Schlauchquerschnitte im ihre durch die Ziffer 7 bezeichnete Achse schwenken. Damit halten die Seile 4 und 5 die Anschlußteile 2 des Schlauches bezüglich ihrer Achse in einem konstanten, vorgebebenen Abstand.

Da in der neutralen Biegeebene nach die Länge des Schlauches 1 konstant bleibt, kann sich keine reibende Relativbewegung zwischen Schlauch 1 und Seilen 4 und 5 ergeben, so daß es entsprechende hier auch nicht zu einer Reibungsbeanspruchung und zu Verschleiß kommen kann unabhängig davon, ob zwischen Schlauch 1 und Seilen 4 und 5 Berührung gegeben ist oder nicht.

Wie Fig. 1 zeigt, ist der Abstandhalter 3 durch einen entsprechende gebogenen Draht mit Kreisquerschnitt gebildet, dessen freie Enden das Seil 4 beidseits hinterhaken, womit die Verbindung zwischen Schlauch 1, Seilen 4 und 5 sowie Abstandhalter 3 unverlierbar geschlossen ist. Selbstverständlich sind anstelle der in Fig. 1 gezeigten Form zahlreiche andere Ausbildungen des Abstandhalters 3 möglich, vorausgesetzt, daß die am Beispiel gemäß Fig. 1 erläuterte Funktion erfüllt wird. Dies geschieht beispielsweise auch durch halbkreisförmige, scheibenartig ausgebildete Segmente, die die Seile 4 und 5 an endständigen Bohrungen durchqueren und die abwechselnd von der einen oder anderen Seite des Schlauches 1 in benachbarte Wellentäler eingesetzt sind. Es ist also nicht erforderlich, daß in jedem Wellental ein vollständig umlaufender Abstandhalter vorhanden ist.

Was die Seile 4 und 5 betrifft, so können diese wie dargestellt glatte Stäbe oder Draht- bzw. Faserbündel sein. Es besteht jedoch auch die Möglichkeit, hier Bänder oder Bandpakete zu verwenden oder aber auch Ketten aus gelenkig aneinandergereihten Gliedern, die selbst durchaus als biegesteife Elemente ausgebildet sein können. Die so geschilderten Variationsmöglichkeiten betreffen grundsätzlich auch alle anhand der weiteren Figuren beschriebenen Ausführungsbeispiele, weshalb dort auf diese Frage allenfalls in spezieller Hinsicht noch einmal eingegangen wird.

Fig. 2 zeigt im Gegensatz zu Fig. 1 eine Axialabstützung eines Wellschlauches 8, die in dessen Innerem angeordnet ist. Auch hier weist der Wellschlauch 8 an seinen Enden Anschlußteil 9 auf, an denen in der neutralen Biegeebene 10 zwei einander gegenüberliegende angeordnete Seile 11, 12 befestigt sind.

Die Seile 11 und 12 werden durch Abstandhalter 13 geführt, die halbkreisförmig ausgebildet und von innen in die Welltäler Ringwellschlauches 8 eingesetzt sind. Dabei ist hier die Anordnung so getroffen, daß in entgegengesetzter Richtung umlaufende Abstandhalter 13 um eine Wellental versetzt angeordnet sind. Selbstverständlich können die Abstände auch größer gewählt werden, wenn dies für eine ordentliche Führung des Schlauches 8 gegenüber den Seilen 11 und 12 ausreichend ist.

Wie ersichtlich, können die Seile 11 und 12 in Anlage an den Innenkrempen des Wellschlauches 8 sein, was jedoch zu keiner reibenden Relativbewegung führt, da die Seile 11 und 12 in der neutralen Biegeebene 10 liegen. Zweckmäßigerweise kann jedoch vorgesehen sein, daß sie Seile 11 und 12 gegenüber der Innenkontur des Schlauches 8 einen geringfügigen Abstand haben.

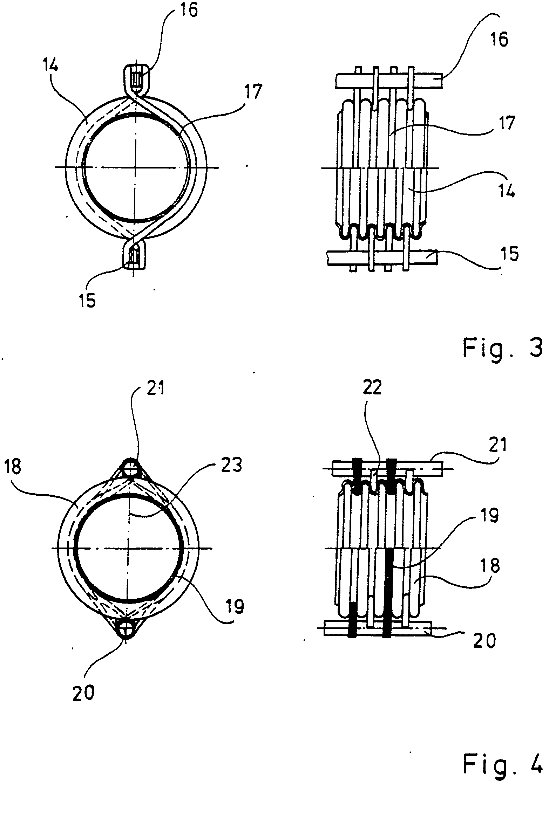

Fig. 3 zeigt eine gegenüber dem Beispiel gemäß Fig. 1 abgewandelte Ausführungsform mit einem Wellschlauch 14 und Seilen 15, 16, die hier als Bandpakete ausgebildet sind, wie dies insbesondere aus der Achsansicht in Fig. 3 links ersichtlich ist.

Die Abstandhalter 17 sind als halbkreisförmige, von außen in die Wellentäler des Wellschlauches 14 eingesetzte Bügel ausgebildet, die die Seile 15, 16 hakenförmig hintergreifen. Ähnlich wie im Beispiel gemäß Fig. 2 sind auch hier gegenläufig gekrümmte Bügel 17 abwechselnd in benachbarten Wellentälern angeordnet.

Fig. 4 ist ein Ausführungsbeispiel dafür, daß —wiederum mit gegenläufiger Krümmung in benachbarten Wellentälern versetzt angeordnetin die Wellentäler eines Wellschlauches 18 schlaffe Haltemittel 19 eingelegt sind, die die Seile 20, 21 umschlingen. Zwischen den Halteelementen 19 sind in die Wellentäler Distanzstücke 22 eingesetzt, die die Seile 20, 21 nach radial innen gegenüber dem Schlauch 18 abstützen. Auch hier liegen die Seile 20, 21 in der neutralen Biegeebene 23.

Bei den Beispielen gemäß Fig. 1 bis 4 sind die Abstandhalter jeweils in die Wellentäler des Wellschlauches eingesetzt. Selbstverständlich besteht gleichermaßen die Möglichkeit, die Abstandhalter auf die Wellenberge aufzusetzen. Dabei muß nur durch geeigneten Formschluß entweder gegenüber dem Seil oder dem Wellschlauch dafür Sorge getragen werden, daß die Abstandhalter sich nicht in Axialrichtung verschieben können. Ein Beispiel hierfür wird anhand der Fig. 17 noch näher erläutert.

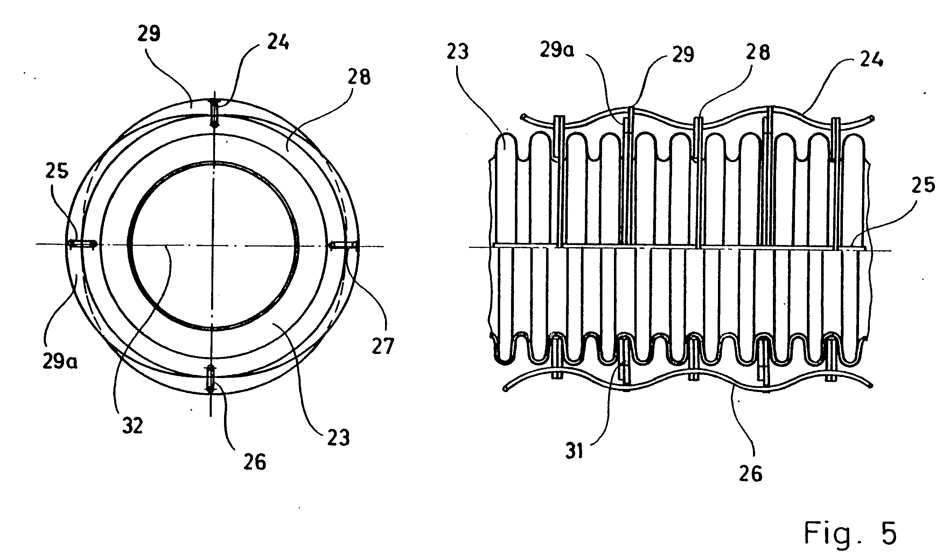

Gemäß Fig. 5 sind symmetrisch um ein Wellrohr 23 verteilt vier Seile 24, 25, 26, 27 angeordnet, die durch Abstandhalter 28 verlaufen, die durch halbreisscheibenförmige Ringsegmente gebildet sein können und in Wellentäler des Schlauches in Axialrichtung mit gleichmäßigem Abstand eingesetzt sind.

Zwischen den Abstandhaltern 28 befinden sich Paare von Halteelementen 29, 29a, die äußere Einkerbungen zum Einlegen der Seile 24 bis 27 aufweisen, wobei jedoch hier die Seile gegenüber der Schlauchachse 30 einen größeren Abstand haben als bei den Abstandhaltern 28. Außerdem haben die Halteelemente 29, 29a einen freien Innenquerschnitt 31, der in Radialrichtung gegenüber der benachbarten Wandung des Schlauches 23 einen nennenswerten Abstand für die Halteelemente 29, 29a bildet.

Darüber hinaus ist die Anordnung so getroffen, daß die Halteelemente 29, 29a jeweils nur diametral einander gegenüberliegende Seile erfassen, während sie gegenüber den anderen Seilen radial frei beweglich sind. Im vorliegenden Falle erfassen die Halteelemente 29 die Seile 24 und 26, während die Halteelemente 29a die Seile 25 und 27 erfassen. Die radiale Freiheit gegenüber den jeweils nicht erfaßten Seilen ist, wie in Fig. 5 links ersichtlich, durch Rücknahme des Außenquerschnittes der Halteelemente 29 bzw. 29a erreicht.

Auf diese Weise ist eine Konstruktion geschaffen, die eine allseitige Biegbarkeit des Schlauches 23 erlaubt. Stellt mach sich beispielsweise die Ebene 32 als Beigeebene vor und denkt sich den Schlauch mit seinen bezogen auf die rechte Hälfte der Fig. 5 äußeren Enden nach unten gebogen vor, so ergibt sich dabei, daß die Halteelemente 29 sich nach unten gegenüber dem Schlauch 23 radial verschieben, da bei dieser Schlauchbiegung der Abstand zwischen den oberen Enden der nicht dargestellten Anschlußteile größer und der Abstand zwischen den unteren Enden kleiner wird. Entsprechend kann sich durch die erwähnte Verschiebung der Halteelemente 29 das Seil 24 strekken, während dabei gleichermaßen das Seil 26 stärker gewellt wird, ohne daß damit die zu den Seilen 25 und 27 äquidistante, bogenförmige Haltefunktion der Seile 24 und 26 über die Abstandhalter 28 verlorengeht.

Die genannte Verscheibebewegung der Halteelemente 29 wird durch die Seile 25 und 27 nicht behindert, da die Halteelemente 29 diesen Seilen gegenüber frei sind.

Entsprechend spielen sich die Verhältnisse teilweise in Mischform bei allen anderen Biegeebenen ab. Wesentlich ist auch hier, daß eine tribologische Beanspruchung nicht stattfindet.

Bei der in Fig. 5 dargestellten Bauform sind vier Seile 24 bis 27 vorgesehen. Der Vollständigkeit halber darf darauf hingewiesen werden, daß die beschriebene Funktionsfähigkeit bei entsprechender konstruktiver Anpassung auch bereits bei Verwendung von nur zwei oder drei Seilen gegeben ist.

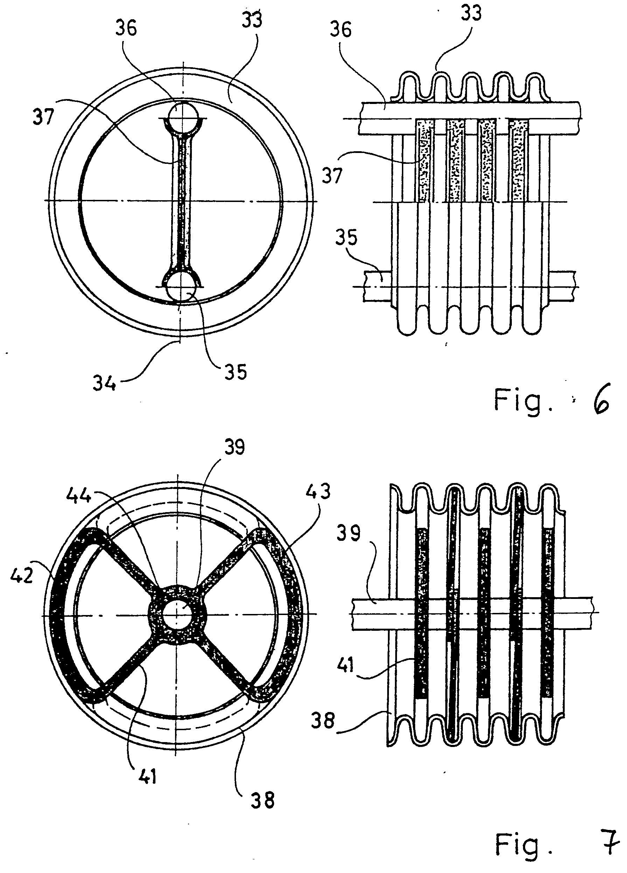

Fig. 6 zeigt eine variierte Ausführungsform für eine innere Abstützung eines Schlauches 33 über in einer neutralen Biegeebene 34 diametral einander gegenüberliegende angeordnet Seile 35, 36. Hier sind die Seile über den Leitungsquerschnitt durchquerende Stege 37 abgestützt, die die Seile 35, 36 über endständige, halbschalenförmige Ausnehmungen erfassen. Bei dieser Bauform muß selbstverständlich dafür Sorge getragen werden, daß die Stege 37 gegenüber den 35, 36 fixiert sind, also in Axialrichtung nicht verrutschen könne. Die Seile 35, 36 befinden sich im übrigen in Anlage an die Innenkrempen des Schlauches 33, was jedoch nicht zu einer reibenden Beanspruchung führt, da, wie gesagt, die Seile in der neutralen Beigeebene 34 liegen.

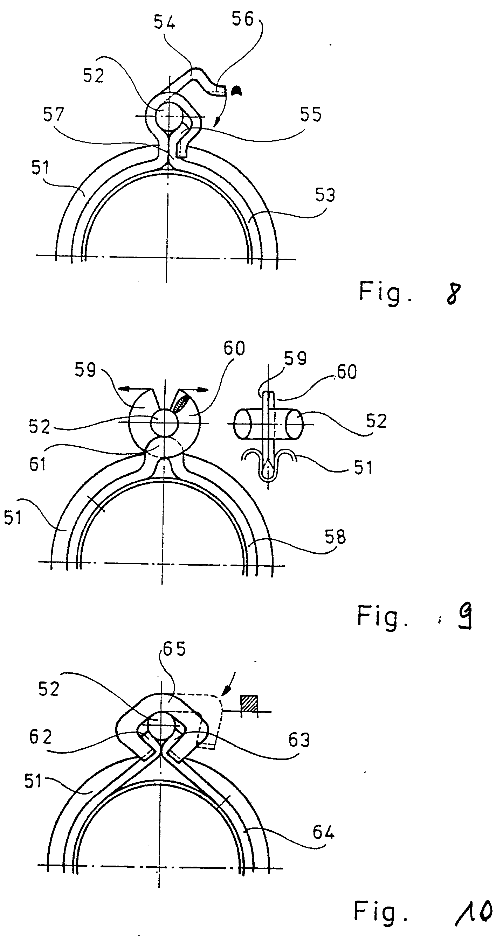

Eine weitere Ausführungsform für eine innere Abstützung eines Wellschlauches 38 ist in Fig. 7 dargestellt, wobei wiederum die Anschlußteile des Schlauches fortgelassen sind. Hier ist ein Seil 39 koaxial zur Schlauchachse 40 angeordnet und in dieser Position gegenüber dem Schlauch durch kreuzförmige Querstege 41 gehalten, die in Wellentälern des Schlauches an zwei diametral einander gegenüberliegenden Bereichen 42, 43 anliegen. Im übrigen sind in Axialrichtung des Schlauches nebeneinanderliegende Querstege 41 um 90° gegeneinander verdreht angeordnet. Dadurch ist es möglich, zur Montage die Querstege 41 gegenüber dem Seil 39 zu kippen und erste nach der Einführung in die Schlauchbohrung aufzurichten. Um diese Kippbewegung noch zu erleichtern, kann die das Seil 39 aufnehmende zentrale Bohrung 44 der Querstege 41 einen gegenüber dem Seil 49 etwas größeren Querschnitt aufweisen.

Die in Fig. 7 dargestellte Bauform ergibt ebenfalls wieder eine allseitige Biegbarkeit des Schlauches 38, da das Seil 39 durch seine Anordnung immer in der neutralen Biegeebene liegt. Auch hier kann im übrigen die Konstruktion so vorgenommen werden, daß die Querstege 41 mit ihren äußeren Teilen 42, 43 auf den nach innen ragenden Schlauchkrempen sitzt, wobei jedoch dann durch Formschluß od. dgl. die Möglichkeit einer Axialverschiebung unterbunden werden muß.

Die Fig. 8 bis 12 zeigen in vergrößerter, auszugsweiser Axialansicht verschiedene Bauformen von Abstandhaltern, die jeweils in Verbindung mit einem in allen Figuren gleich bezifferten Wellschlauch 51 und einem Seil 52 dargestellt sind.

So ist gemäß Fig. 8 ein offener Drahtring 53 mit Kreisquerschnitt gezeigt, dessen eines Ende 54 um das Seil 52 gebogen und von außen auf das andere Ende 55 geklappt ist, wobei durch eine sich in Längsrichtung des Endes 54 erstreckende Nut 56 ein Formschluß mit dem Ende 55 hergestellt werden kann. Die Enden 54, 55 bilden um übrigen einen sich radial erstreckenden Steg 57, der dafür sorgt, daß das Seil 52 mit Abstand gegenüber der Außenkontur des Schlauches 51 gehalten ist.

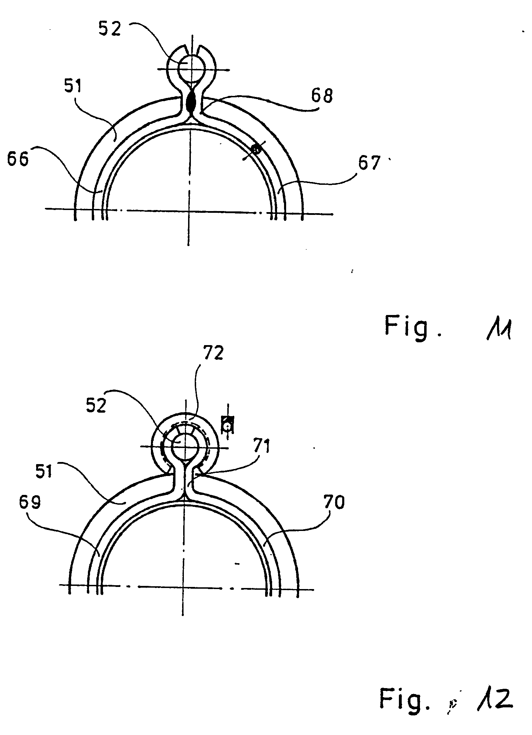

Gemäß Fig. 9 ist ein Abstandhalter in Form eines Drahtringes 58 mit Kreisquerschnitt mit seinen freien Enden 59, 60 jeweils hinter das Seil 52 gehakt, er wird also durch das Seil 52 geschlossen gehalten. Um auch hier das Seil 52 in radialem Abstand gegenüber der Außenkontur des Schlauches 51 zu halten, weisen die Ende 59, 60 eine schlangenlinienförmige Kontur auf, durch die in geschlossenem Zustand ein Höcker 61 zur Auflage des Seiles 52 gebildet wird. Wie aus der um 90° gedrehten rechten Darstellung in Fig. 10 ersichtlich, sind die Enden 59, 60 ausgehend vom Querschnitt des Drahtringes 58 abgeflacht.

Gemäß Fig. 10 werden die freien Enden 62, 63 eines Drahtringes 64 mit Kreisquerschnitt durch einen Klemmbügel 65 zusammengehalten, der das Seil 52 umfaßt. Der Klemmbügel 65 hat rechteckigen Querschnitt.

Fig. 11 zeigt ein Beispiel, bei dem der Abstandhalter aus Drahtringhälften 66, 67 mit kreisförmigem Querschnitt zusammengesetzt ist. Die Ringhälften bilden mit ihren Enden einen radialen Steg 68, an dem sie miteinander verschweißt sind. Von diesem Steg ausgehend, erfassen die Enden der Ringhälften das Seil 52.

Schließlich zeigt Fig. 12 eine mit Fig. 10 vergleichbare Ausführungsform, bei der Drahtringhälften 69, 70 wieder einen radialen Steg 71 bilden und mit ihren Enden das Seil 52 umfassen. Um die Hälften 69, 70 zusammenzuhalten, ist von der Seite her ein Klemmbügel 72 aufgeschoben.

Die Fig. 8 bis 12 zeigen Beispiele für eine einfache konstruktive Ausbildung des Abstandhalters mit einfacher, teilweise lösbarer Montagemöglichkeit.

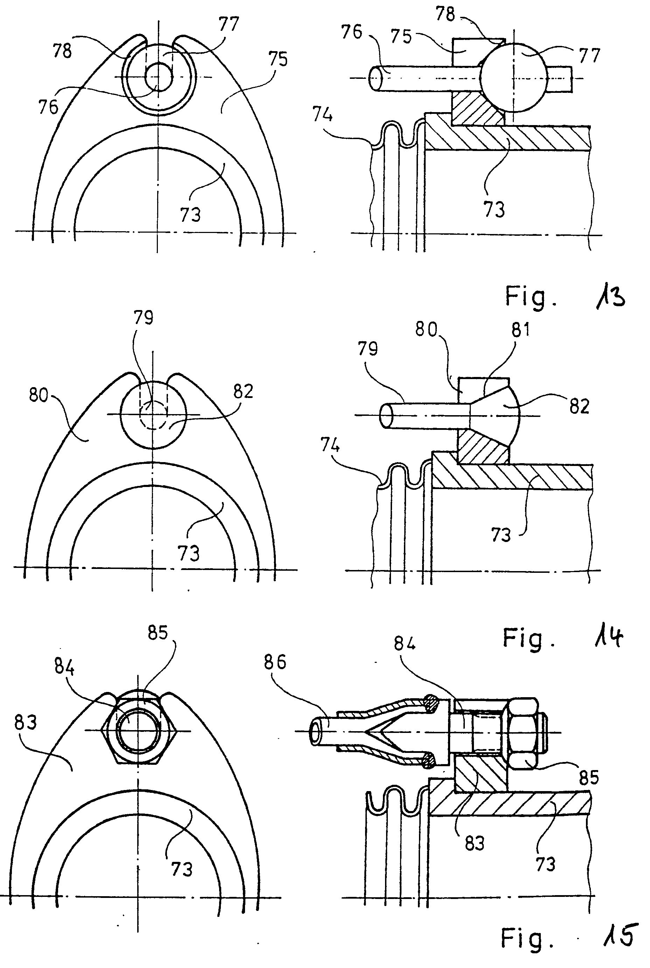

In den Fig. 13 bis 15 sind Beispiele für die Verbindung des jeweiligen Seiles mit dem Anschlußteil 73 eines Schlauches 74 dargestellt.

Hierzu ist gemäß Fig. 13 auf das Anschlußteil 73 ein Haltering 75 aufgesetzt, den das Seil 76 durchquert. Auf der schlauchabgewandten Seite ist am Seil 76 eine Kugel 77 ausgebildet, die an einer pfannenförmigen Auflagefläche 78 des Ringes 75 anliegt. Damit hat das Seil 76 in Grenzen die Möglichkeit, gegenüber dem Ring 75 Schwenkbewegungen auszuführen.

Eine ähnliche Abstützung, jedoch ohne die Möglichkeit einer Schwenkbewegung, zeigt Fig. 14, wo das Seil 79 einen auf dem Anschlußteil 73 sitzenden Ring 80 durchquert und gegen dessen kegelförmige Anlagefläche 81 über eine kegelförmige Erweiterung 82 anliegt.

Fig. 15 zeigt eine in Axialrichtung einstellbare Seilbefestigung. Hier ist auf das Anschlußteil 73 wieder ein Ring 83 aufgesetzt, in dem ein Schraubbolzen 84 sitzt, der über eine Mutter 85 gegen den Ring 83 abgestützt ist. Am anderen Ende des Schraubbolzens ist das Seil 86 angeschwweißt, daß zu diesem Zweck, wie dargestellt, aufgespalten ist.

Die Fig. 13 bis 15 können natürlich nur einige Beispiele für die Seilbefestigung an den Anschlußteilen sein. Nimmt man beispielsweise die Fig. 7, so wäre dort im Anschlußteil eine dem Quersteg 41 entsprechende Konstruktion anzubringen.

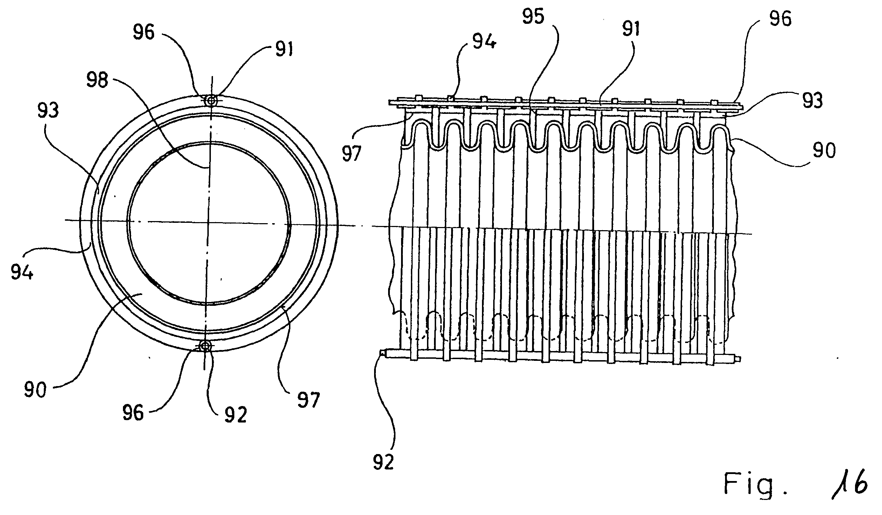

Fig. 16 zeigt eine Ausführungsform nach dem Lösungsprinzip gemäß Fig. 1 für einen außen abgestützten Schlauch 90, wobei in vergleichbarer Weise auch eine Schlauchinnenabstützung vorgenommen werden kann.

Gemäß Fig. 16 ist der Schlauch 90 außen von zwei diametral einander gegenüberliegenden Seilen 91, 92 begleitet, auf die Ringe 93 über Bohrungen radialer Stege 94 aufgefädelt sind, die gegenseitig einen Abstand 95 aufweisen. Zur Bildung und Aufrechterhaltung des Abstandes 95 sind zwischen benachbarten Stegen auf die Seile 91, 92 Hülsen 96 aufgefädelt, gegen die benachbarte Stege 94 abgestützt sind.

Die Ring 93 haben eine glattzylindrische Innenkontur 97, die vorzugsweise einen etwas größeren Durchmesser hat als die Außenkontur des Schlauches 90. Auf diese Weise ist ein gliederförmiges Stützrohr für den Wellschlauch 90 geschaffen, dessen durch die Ringe 93 gebildeten Glieder bei Biegung des Schlauches bezüglich einer Biegeebene 98, in der die Seile 91, 92 liegen, ihren gegenseitigen Abstand auf der Biegungsaußenseite vergrößern und auf der Beigungsinnenseite verkleinern, wobei sich der Schlauch gegen die Ringe 93 auf der Biegungsaußenseite anlegen wird, ohne daß es dort zu Relativbewegungen zwischen Schlauch und Ringen kommen kann.

Eine entsprechende Konstruktion kann man sich leicht im Inneren des Wellschlauches vorstellen, wobei der Unterschied lediglich darin besteht, daß die Ringe die dem Schlauch zugewandte glattzylindrische Kontur auf ihrer Außenseite aufweisen, im übrigen aber den Durchtrittsquerschnitt für des geführte Medium freilassen.

In Fig. 16 sind Ringe 93 parallel zueinander auf die Seite 91, 92 aufgefädelt. Eine Variante ist beispielsweise jedoch ohne weiteres dadurch möglich, daß ein Band mit dem Profil der Ringe 93 schraubengangförmig gewickelt um den Schlauch angeordnet ist, wobei die einzelnen Schraubengänge gegenseitig den Axialabstand aufweisen. Zur Herstellung des formschlußssigen Eingriffes mit den Seilen kann in diesem Falle so vorgegangen werden, daß der schraubengangförmige Wickel axial zusammengedrückt und auf gegenüberliegenden Seiten mit einer von außen eingefrästen Nut versehen wird, in die dann bei auseinandergezogenem Wickel die Seile von außen eingelegt sind.

Fig. 17 zeigt einmal einen ungestützten, flexiblen Metallschlauch, bestehend aus im wesentlichen einem hochflexiblen, balgähnlichen Wellrohr 100 aus Stahl oder einem anderen Metall, dessen Wandstärke sich nach dem einzubringenden Druck und der angestrebten Biegbarkeit richtet. An den Enden des Schlauches 100 ist jeweils ein Anschlußstück 101 vorgesehen, mit dem der Schlauch an eine Druckleitung oder Druckeinrichtung anschließbar ist.

Fig. 18 zeigt den Wellschlauch aus Fig. 1, bei dem zur Aufnahme von axialen Belastungen die beiden Anschlußstücke 101 mit zwei gegenüberliegenden Seilen 102 fest verbunden sind. Die Seile 102 können Einzeldrähte, Mehrfachdrähte oder Bänder sein. Zur Abstützung der Ringwellen 103 gegen Ausknicken unter einem Innendruck sind Abstandhalter 104 in Form von Stützringen vorgesehen, die jeweils in einem Wellental 105 des Schlauches 100 angeordnet sind.

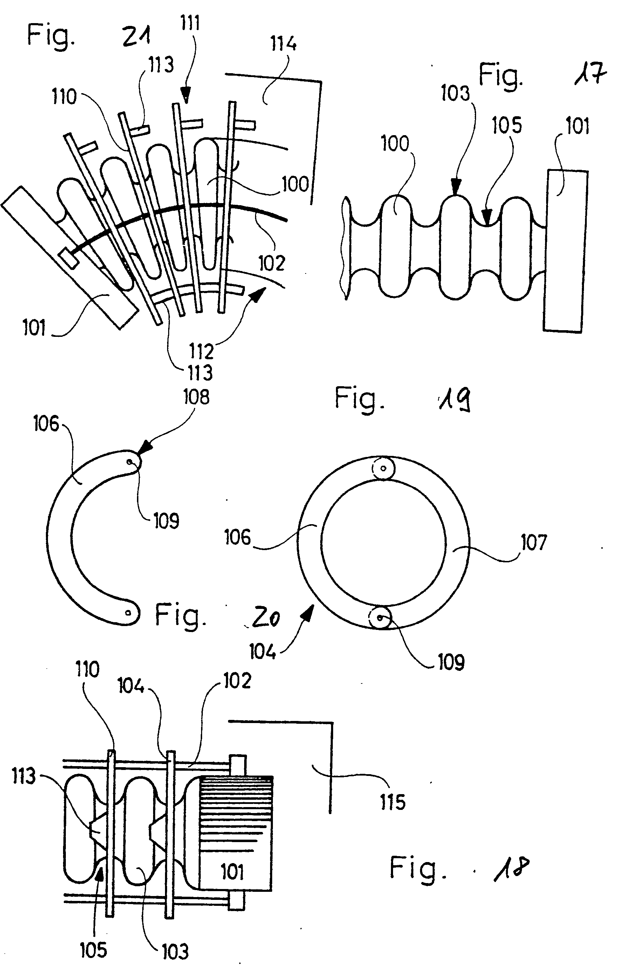

Fig. 19 zeigt einen solchen Stützring 104 in Draufsicht. Die Stützringe 104, die einen runden, polygonalen oder länglichen Querschnitt haben können, bestehen aus zwei Ringhälften 106 und 107, deren Enden 108 mit jeweils einer Bohrung 109 versehen sind. Die Ringhälften 106 und 107 werden paarweise um je ein Wellental 105 gelegt und auf die Seile 102 aufgereiht.

Fig. 20 zeigt eine Ringhälfte. Die Stützringe 104 können als drahtähnliche oder flache Ringe hergestellt werden. Anstelle in den Wellentälern 105 angeordnet zu sein, können die Stützringe auch am Außendurchmesser 103 anliegen. Eine einfache Ausführung besteht aus dünnen Blechen, die einfach herzustellen sind. Eine Ringhälfte 106, 107 kann samt den Bohrungen 109 in einem Arbeitsgang gestanzt werden.

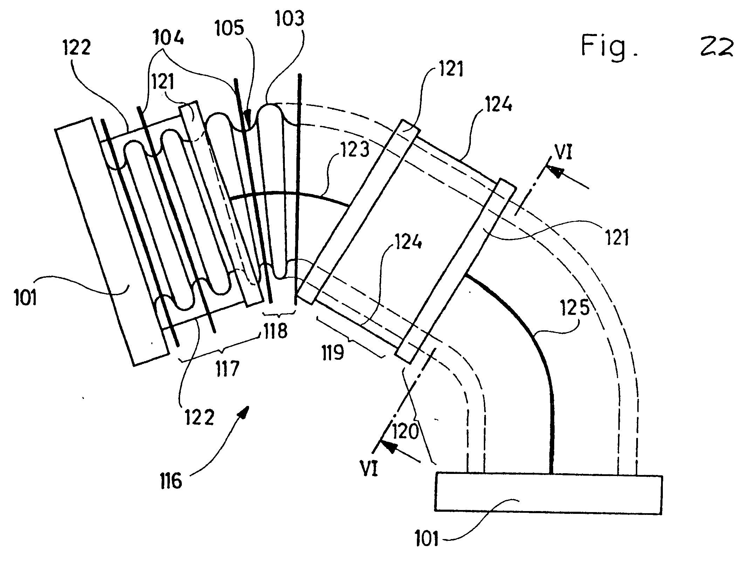

Um bei hohen Biegewinkeln das Überdehnen von einzelnen, die Krümmung übernehmenden Wellen des Schlauches 100 zu verhinern, können die Stützringe 110 (Fig. 22) jeweils in ihrem freien Bereich, d.h. an den Zug- und Druckseiten 111 bzw. 112 des Wellschlauches 100 mit Distanzhaltern 113 versehen sein. Die Distanzhalter 113 sorgen dafür, daß sich alle Wellen gleichmäßig an der Gesamtkrümmung des Schlauches in Höhe des maximal zulässigen Biegewinkels beteiligen. Die Distanzhalter 113 können direkt aus den Blech-Ringhälften herausgeformt sein, was im Stanz-Arbeitsgang eingeschlossen werden kann. Die Distanzhalter 113 sind relativ kurz ausgelegt, um den geforderten Biegeradius nicht zu beeinträchtigen.

In den in den Fig. 17 bis 21 dargestellten Ausführungsbeispielen sind zwei diametral angeordnete und mit den beiden Anschlußstücken 101 verbundene Seile 102 vorgesehen. Diese Ausführung läßt nur eine Biegung in einer Ebene 114 zu, die senkrecht zu der Ebene 115 verläuft, die durch die beiden Stäbe 102 führt.

Fig. 22 zeigt eine weitere Bauform, bei der der Wellschlauch 116 in allen Richtungen biegbar ist. Bei dieser Ausführung sind die Abstandhalter in Form der Stützringe 104 nur bereichsweise vorgesehen. In Fig. 22 sind vier derartige Bereiche 117 bis 120 dargestellt. An den Grenzstellen zwischen zwei benachbarten Bereichen 117 bis 120 ist jeweils ein Außenring 121 vorgesehen, der zur Halterung von in diesem Fall mehreren kürzeren Seilen 122 bis 125 und zur Übertragung der Axialkräfte von einem Seil zum anderen dient.

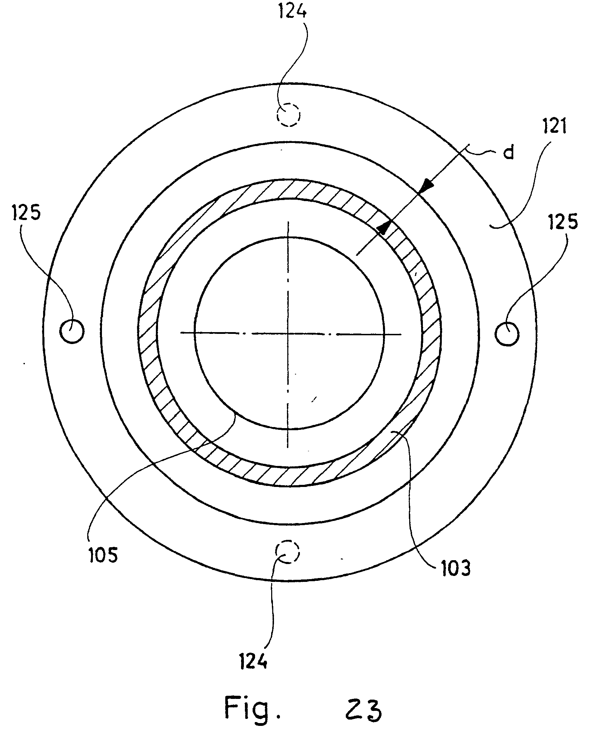

Fig. 23 zeigt einen Querschnitt gemäß der Schnittlinie VI—VI in Fig. 22 durch den Bereich 120 aus Fig. 22. Der Schnitt führt beispielsweise durch eine Außenwelle 103. Um die Außenwelle 103 ist der Außenring 121 derart angeordnet, daß zwischen dem Außenumfang der Außenwelle 103 und dem inneren Umfang des Außenringes 121 ein Spalt d verbleibt. Der Spalt d kann wenige Zehntel mm betragen. An der in Fig. 23 sichtbaren Seite des Außenringes 121 sind die beiden Seile 125 des Bereiches 120 am Außenring 121 befestigt. Sie sind sich gegenüberliegend angeordnet. Über den Umfang um 90° dazu versetzt sind an der Rückseite des Außenringes 121 die Seile 124 für den Nachbarbereich 119 angeschlossen. Die Verbindung zwischen Seil und Außenring 121 kann eine einfache Lötverbindung sein. Von einem Bereich 117 bis 120 zum Nachbarbereich sind die Seile jeweils um 90° versetzt. Hierdurch wird erreicht, daß für jede Biegung des Wellschlauches 116 zumindest ein Teil der Bereiche 117 bis 120 der Biegung folgen kann, nachdem keine Mantellinie des Wellschlauches 116 vollständig einem einzigen Seil gegenüberliegt.

In der in Fig. 22 dargestellten Stellung liegen die Seilpaare 122 und 124 in der Papierebene. Einer Biegung in dieser Ebene können folglich die mit diesen Seilpaaren 122 bzw. 124 bestückten Bereiche 117 bzw. 119 nicht folgen. Dafür lassen sich die Zwischenbereiche 118 und 120 entsprechend biegen, wobei die in einer senkrecht zur Biegeebene verlaufenden Ebene liegenden Seilpaare 123 bzw. 125 nicht auf Zug, sondern lediglich auf Biegung beansprucht werden. Aufgrund des Spaltes d kann die Verformung in den Grenzstellen innerhalb der Außenringe 121 ungehindert kontinuierlich in den nicht verformten Bereich übergehen, wie es an der Grenzstelle zwischen den Bereichen 117 und 118 dargestellt ist.

Eine gleich Situation ergibt sich bei einer Biegung senkrecht zur Ebene der Zeichnung. In allen anderen Richtungen sind mehr oder weniger alle Bereiche 117 bis 120 mitbeteiligt, zumal in diesen Fällen sich keine Seile in der Biegeebene befinden.

Die Reihenfolge bzw. der Abstand von jeweiligen Außenringen 121 wird sich nach dem jeweiligen Anwendungsgebiet richten. In dem einem Außenring 121 benachbarten Wellentälern 105 werden keine Stützringe 104 angeordnet, damit der Außenring 121 bei Biegungen über benachbarte Wellentälerbereiche streifen kann.

Derartige Schläuche werden als Wellschläuche für innendruckbelastete Rohre sowie als Lateralund Angularkompensatoren verwendet.

Die Beweglichkeit des Wellschlauches kann erhöht werden, indem die Bohrungen 109 der Ringhälften als Langlöcher ausgebildet werden, die radial gerichtet sind.

## Patentansprüche

1. Biegsbares Wellrohr mit zueinander parallelen, ringförmigen Wellen, endständigen Anschlußteilen und diese gegen axiale Abstandsänderung haltenden, mit den Anschlußteilen in Zug- und/oder Druckrichtung fest verbundenen Längsstützmitteln, gegen die das Wellrohr wenigstens mittelbar abgestützt ist, dadurch gekennzeichnet, daß die Längsstützmittel wenigstens ein flexibles, sich im wesentlichen parallel zum Wellrohr (1, 8, 14, 18, 23, 33, 38, 51, 74, 90, 100, 116) erstreckendes Seil (4, 5; 11, 12; 15, 16; 20, 21; 24 bis 27; 35, 36; 39, 52, 76, 79, 86, 91, 92, 102, 122 bis 125) ist, daß die radiale Relativlage zwischen Wellrohr und Seil durch das Seil erfassende, in Abständen über die Wellrohrlänge verteilt angeordnete Abstandhalter (3, 13, 17, 19, 28, 37, 41, 53, 58, 64, 67, 70, 93, 104, 110) gegeben iste und daß das Wellrohr in Radialrichtung durch das Seil geführt ist.

2. Wellrohr nach Anspruch 1, dadurch gekennzeichnet, daß bei einem Seil (39) dieses konzentrisch zur Wellrohrachse angeordnet ist.

3. Wellrohr nach Anspruch 1, dadurch gekennzeichnet, daß bei mehreren Seilen (4, 5; 11, 12; 15, 16; 20, 21; 24 bis 27; 35, 36; 52, 76, 79, 86, 91, 92, 102, 122 bis 125) diese symmetrisch um die Wellrohrachse verteilt angeordnet sind.

4. Wellrohr nach Anspruch 3, dadurch gekennzeichnet, daß bei zwei Seilen (4, 5; 11, 12; 15, 16; 20, 21; 35, 36; 91, 92, 102, 122 bis 125) diese in der neutralen Biegeebene (7, 10, 23, 34, 98) des Wellrohres (1, 8, 14, 18, 33, 90, 100) angeordnet sind.

5. Wellrohr nach Anspruch 3 oder 4, dadurch gekennzeichnet, daß die Seile (122 bis 125) über die Wellrohrlänge in wenigstens zwei gleiche oder ungleiche Abschnitte (117 bis 120) unterteilt sind und daß die Seile benachbarter Abschnitte an einem gemeinsamen, den Schlauch (116) ggf. mit Spiel (d) umfassenden Außenring (121) befestigt sind.

6. Wellrohr nach Anspruch 5, dadurch gekennzeichnet, daß die Seile (122 bis 125) benachbarter Abschnitte (117 bis 120) in Umfangsrichtung des Wellrohres (116) gegeneinander versetzt angeodnet sind.

7. Wellrohr nach Anspruch 6, dadurch gekennzeichnet, daß die Seile (122 bis 125) um 90° gegeneinander versetzt sind.

8. Wellrohr nach Anspruch 2, dadurch gekennzeichnet, daß die Abstandhalter (41) in die Wellrohrwellen ein- und/oder auf diese gegen Verschiebung in Achsrichtung des Wellrohres (38) gesichert aufgesetzte, das Seil (39) an ihrer Mitte erfassende Querstege (41), -kreuze od. dgl. sind.

9. Wellrohr nach Anspruch 8, dadurch gekennzeichnet, daß die Querstege (41) sich im wesentlichen zwischen zwei einander diametral gegenüberliegenden Bereichen (bei 42, 43) des Wellrohres (38) erstrecken und daß in Längsrichtung des Wellrohres benachbarte Querstege gegeneinander um 90° verdreht angeordnet sind.

10. Wellrohr nach Anspruch 9, dadurch gekennzeichnet, daß die Querstege (41) das Seil (39) unter Belassung eines Spieles erfassen.

11. Wellrohr nach Anspruch 3, 4 oder 5, dadurch gekennzeichnet, daß bei zwei oder mehreren innerhalb des Wellrohres angeordneten Seilen (11, 12; 35, 36) zwischen diesen sie mit ihren Enden erfassende, gegen Verschiebung in Achsrichtung gesicherte Querstege (13, 37) als Abstandhalter angeordnet sind.

12. Wellrohr nach Anspruch 11, dadurch gekennzeichnet, daß die Querstege (37) sich diametral durch den Wellrohr querschnitt erstrecken.

13. Wellrohr nach Anspruch 11, dadurch gekennzeichnet, daß die Querstege (13) halbbogenförmig ausgebildet und in die Wellrohrwellen ein- bzw. auf diese gegen Verschiebung in Achsrichtung des Wellrohres (8) gesichert aufgesetzt sind.

14. Wellrohr nach Anspruch 13, dadurch gekennzeichnet, daß die Querstege (13) an ihren Enden fluchtende Bohrungen aufweisen, durch die die Seile (11, 12) die Querstege paarweise haltend hindurchgezogen sind.

15. Wellrohr nach Anspruch 14, dadurch gekennzeichnet, daß die Querstege (13) aus dünnen, ebenen Blechen bestehen.

16. Wellrohr nach Anspruch 15, dadurch gekennzeichnet, daß die Dicke der Querstege (13) zwischen 0.1 und 1.0 mm, vorzugsweise unter 0.5 mm liegt.

17. Wellrohr nach Anspruch 14, dadurch gekennzeichnet, daß die Bohrungen der Querstege als radial gerichtete Langlöcher ausgebildet sind.

18. Wellrohr nach einem der Ansprüche 11 bis 13, dadurch gekennzeichnet, daß die Seile (35, 36) radial außen gegen die Innenkontur des Wellrohres (33) in Anlage sind.

19. Wellrohr nach einem der Ansprüche 11 bis 13, dadurch gekennzeichnet, daß zwischen Seilen und Wellrohrwandung Distanzstücke zur radialen Abstandsbildung eingesetzt sind.

20. Wellrohr nach Anspruch 19, dadurch gekennzeichnet, daß die Distanzstücke durch die Querstege gebildet sind.

21. Wellrohr nach Anspruch 2, 4 oder 5, dadurch gekennzeichnet, daß die Abstandhalter außenzylindrische Ringe sind, deren Außenkontur vorzugsweise geringfügig kleiner als die Innenkontur des Wellrohres ist, und daß die Ringe mit gegenseitigem Abstand gegen Axialverschiebung gesichert auf das Seil oder die Seile aufgesetzt sind.

22. Wellrohr nach Anspruch 21, dadurch gekennzeichnet, daß der gegenseitige Abstand der Ringe durch auf dem Seile oder den Seilen zwischen den Ringen angeordnete Distanzstücke od. dgl. gesichert ist.

23. Wellrohr nach Anspruch 3, 4 oder 5, dadurch gekennzeichnet, daß bei zwei oder mehreren außerhalb des Schlauches (1, 14, 18, 23, 51, 74, 90, 100, 116) angeordneten Seilen (4, 5; 15, 16; 20, 21; 24 bis 27; 52, 76, 79, 86, 91, 92, 102, 122 bis 125) die Abstandhalter (3, 17, 19, 22, 28, 53, 58, 64, 67, 70, 93, 104, 110) als des Wellrohr und die Seile unverlierbar umfassende Ringe oder Ringsegmente ausgebildet sind.

24. Wellrohr nach Anspruch 23, dadurch gekennzeichnet, daß die Ringe oder Ringsegmente in die Wellrohrwellen ein- oder auf diese gegen Verschiebung in Achsrichtung des Wellrohres gesichert aufgesetzt sind.

25. Wellrohr nach Anspruch 23 oder 24, dadurch gekennzeichnet, daß die Ringe oder Ringsegmente selbsttragend (steif) ausgebildet sind.

26. Wellrohr nach Anspruch 25, dadurch gekennzeichnet, daß die Ringsegmente (106, 107) an ihren Enden fluchtende Bohrungen (109) aufweisen, durch die die Seile (102) die Ringsegmente paarweise haltend durchgezogen sind.

27. Wellrohr nach Anspruch 26, dadurch gekennzeichnet, daß die Bohrungen als radial gerichtete Langlöcher ausgebildet sind.

28. Wellrohr nach Anspruch 23 oder 24, dadurch gekennzeichnet, daß die Ringe oder Ringsegmente als schlaffe Umschlingungsmittel (19) ausgebildet sind.

29. Wellrohr nach einem der Ansprüche 23 bis 28, dadurch gekennzeichnet, daß zwischen Seilen (20, 21) und Wellrohr (18) Distanzstücke (22) zur radialen Abstandsbildung eingesetzt sind.

30. Wellrohr nach Anspruch 29, dadurch gekennzeichnet, daß die Distanzstücke durch die Ringe (3, 17, 28, 53, 58, 64, 67, 70) oder Ringsegmente gebildet sind.

31. Wellrohr nach Anspruch 23, dadurch gekennzeichnet, daß bei zwei Seilen (91, 92) die Ringe (93) oder Ringsegmente innenzylindrisch sind, wobei ihre Innenkontur (97) vorzugsweise geringfügig größer als die Außenkontur des Wellrohres (90) ist, und daß die Ringe bzw. Ringsegmente mit gegenseitigem Abstand (95) gegen Axialverschiebung gesichert auf die Seile aufgesetzt sind.

32. Wellrohr nach Anspruch 31, dadurch gekennzeichnet, daß der gegenseitige Abstand der Ringe (93) oder Ringsegmente durch auf den Seilen zwischen den Ringen oder Ringsegmenten angeordnete Distanzstücke (96) od. dgl. gesichert ist.

33. Wellrohr nach einem der Ansprüche 23 bis 32, dadurch gekennzeichnet, daß benachbarte Enden (54, 55, 59, 60, 62, 63) einander zugeordneter Ringsegmente (53, 58, 64, 67, 70) durch Schweißen, Formschluß, aufgesetzt Klemmstücke (65, 72) od. dgl. Fügeverfahren miteinander verbunden sind.

34. Wellrohr nach einem der Ansprüche 23 bis 26, dadurch gekennzeichnet, daß die Ringe (28, 104, 110) oder Ringsegmente (106, 107) scheibenförmig ausgebildet sind.

35. Wellrohr nach Anspruch 34, dadurch gekennzeichnet, daß die Ringe (28, 104, 110) oder Ringsegmente (106, 107) aus dünnen, ebenen Blechen bestehen.

36. Wellrohr nach Anspruch 35, dadurch gekennzeichnet, daß die Dicke der Ringe (28, 104, 110) oder Ringsegmente (106, 107) zwischen 0.1 und 1.0 mm, vorzugsweise unter 0.5 mm liegt.

37. Wellrohr nach einem der Ansprüche 23, 24, 25 oder 28, dadurch gekennzeichnet, daß die Ringe (3, 17, 53, 58, 64, 67, 70) oder Ringsegmente durch Draht od. dgl. mit Kreisquerschnitt gebildet sind.

38. Wellrohr nach Anspruch 23, dadurch gekennzeichnet, daß in Achsrichtung des Wellrohres (23) mittig zwischen benachbarten Ringen (28) oder Ringsegmenten weitere ringförmige oder ringsegmentförmige Halteelemente (29, 29a) angeordnet sind, daß diese diametral zur Wellrohrachse (30) einander gegenüberliegenden Seile (24, 26, bzw. 25, 27) in einem gegenüber den Ringen (28) oder Ringsegmenten größeren radialen Abstand zur Schlauchachse (30) umfassen und halten, daß die Innenkontur (bei 31) der Halteelemente (29, 29a) einen Abstand gegenüber der radial benachbarten Wellrohrwandung aufweist, und daß die Halteelemente gegen Bewegung in Achsrichtung des Wellrohres gesichert sind.

39. Wellrohr nach Anspruch 38, dadurch gekennzeichnet, daß bei vier Seilen (24 bis 27) Halteelementpaare (29, 29a) vorgesehen sind, deren eines Halteelement (29 bzw. 29a) gegenüber dem anderen (29a bzw. 29) um 90° versetzte Seile (24, 26 bzw. 25, 27) umfaßt und hält, und daß jedes Halteelement gegenüber den von ihm nicht erfaßten Seilen radial zur Wellrohrachse (30) frei beweglich iste.

40. Wellrohr nach einem der vorhergehenden Ansprüche, dadurch gekennzeichnet, daß die Abstandhalter bzw. die Halteelemente mit den Seilen fest verbunden sind.

41. Wellrohr nach Anspruch 38, dadurch gekennzeichnet, daß die Halteelemente (29, 29a) teilweise in ein radial benachbartes Wellental des Wellrohres (23) eingetaucht sind.

42. Wellrohr nach einem der Ansprüche 38 bis 41, dadurch gekennzeichnet, daß die Halteelemente (29, 29a) scheibenförmig ausgebildet sind.

43. Wellrohr nach einem der vorhergehenden Ansprüche, dadurch gekennzeichnet, daß die Abstandhalter für jede Wellrohrwelle oder in größeren, regelmäßigen oder unregelmäßigen Abständen vorgesehen sind.

44. Wellrohr nach einem der vorhergehenden Ansprüche, dadurch gekennzeichnet, daß die Abstandhalter (110) an den Zug- und Druckseiten der Wellrohrbiegung mit Distanzhaltern (113) versehen sind.

45. Wellrohr nach einem der vorhergehenden Ansprüche, dadurch gekennzeichnet, daß die Seile (86) an den Schlauchanschlußteilen (73, 83) lösbar und bezüglich ihrer Länge ggf. nachstellbar befestigt sind.

46. Wellrohr nach einem der vorhergehenden Ansprüche, dadurch gekennzeichnet, daß die Seile (76, 79) an den Wellrohranschlußteilen (75, 80) zumindest in Grenzen schwenkbar befestigt sind.

47. Wellrohr nach einem der vorhergehenden Ansprüche, dadurch gekennzeichnet, daß die Seile die Abstandhalter über aufgesetzte Hülsen od. dgl. durchqueren.

**Revendications**

1. Tuyau ondulé flexible comprenant des ondes annulaires, parallèles entre elles, des organes de raccordement terminaux et des moyens de soutien longitudinal qui maintiennent ces organes fixes à l'encontre de la variation de l'écartement axial, et qui sont reliés rigidement aux organes de raccordement dans le sens de traction et/ou dans les sens de la compression, et par rapport auxquels le tuyau ondulé prend appui, du moins indirectement, caractérisé en ce que les moyens de soutien longitudinal sont constitués par au moins un câble flexible (4, 5; 11, 12; 15, 16; 20, 21; 24 à 27; 35, 36; 39, 52, 76, 79, 86, 91, 92, 102, 122 à 125) qui s'étend sensiblement parallèlement au tuyau ondulé (1, 8, 14, 18, 23, 33, 38, 51, 74, 90, 100, 116), en ce que la position relative entre le tuyau ondulé et le câble est imposée par des entretoises (3, 13, 17, 19, 28, 37, 41, 53, 58, 64, 67, 70, 93, 104, 110) qui tiennent le câble et sont réparties à certains écartement sur la longueur du tuyau ondulé, et en ce que le tuyau ondulé est guidé par le câble dans la direction radiale.

2. Tuyau ondulé selon la revendication 1, caractérisé en ce que, dans le cas d'un câble (39), ce câble est disposé concentriquement à l'axe du tuyau ondulé.

3. Tuyau ondulé selon la revendication 1, caractérisé en ce que, dans le cas de plusieurs câbles (4, 5; 11, 12; 15, 16; 20, 21; 24 à 27; 35, 36;

52, 76, 79, 86, 91, 92, 102, 122 à 125) ces câbles sont répartis symétriquement autour de l'axe du tuyau ondulé.

4. Tuyau ondulé selon la revendication 3, caractérisé en ce que, dans le cas de deux câbles (4, 5; 11, 12; 15, 16; 20, 21; 35, 36; 91, 92, 102, 122 à 125), ces câbles sont disposés dans le plan neutre (7, 10, 23, 34, 98) ne la flexion du tuyau ondulé (1, 8, 14, 18, 35, 90, 100).

5. Tuyau ondulé selon la revendication 3 ou 4, caractérisé en ce que les câbles (122 à 125) sont divisés en au moins deux segments (117 à 120) égaux ou inégaux sur la longueur du tuyau ondulé et en ce que les câbles des segments adjacents sont fixés à un anneau extérieur commun (121) qui entoure le tuyau (116), éventuellement avec jeu (d).

6. Tuyau ondulé selon la revendication 5, caractérisé en ce que les câbles (122 à 125) de segments adjacents (117 à 120) sont décalés les uns par rapport aux autres dans la direction circonférentielle du tuyau ondulé (116).

7. Tuyau ondulé selon la revendication 6, caractérisé en ce que les câbles (122 à 125) sont décalés de 90° les uns par rapport aux autres.

8. Tuyau ondulé selon la revendication 2, caractérisé en ce que les entretoises (41) sont des barres transversales (41), des croisillons transversaux ou équivalents, qui tiennent le câble (39) en leur milieu, et qui sont emboîtés dans et/ou sur les ondes du tuyau ondulé, dans des dispositions bloquées à l'encontre de la translation dans la direction axiale du tuyau ondulé (38).

9. Tuyau ondulé selon la revendication 8, caractérisé en ce que les barres transversales (41) s'étendent sensiblement entre deux régions (en 42, 43) du tuyau ondulé (38) qui sont diamétralement opposées l'une à l'autre et en ce que les barres transversales mutuellement adjacentes dans la direction longitudinale du tuyau ondulé sont décalés de 90° les unes par rapport aux autres.

10. Tuyau ondulé selon la revendication 9, caractérisé en ce que les barres transversales (41) tiennent le câble (39) en ménageant un certain jeu.

11. Tuyau ondulé selon la revendication 3, 4 ou 5, caractérisé en ce que, dans le cas de deux ou de plus de deux câbles (11, 12; 35, 36) disposés à l'intérieur du tuyau ondulé, des barres transversales (13, 37) sont disposées entre ces câbles, pour servir d'entretoises, tiennent ces câbles par leurs extrémités et sont bloquées à l'encontre de la translation dans la direction axiale.

12. Tuyau ondulé selon la revendication 11, caractérisé en ce que les barres transversales (37) s'étendent diamétralement dans la section transversale du tuyau ondulé.

13. Tuyau ondulé selon la revendication 11, caractérisé en ce que les barres transversales (13) sont d'une forme en demi-arc et sont emboîtées ans ou sur les ondes du tuyau ondulé, dans des dispositions bloquées à l'encontre de la translation dans la direction axiale du tuyau ondulé (8).

14. Tuyau ondulé selon la revendication 13, caractérisé en ce que les barres transversales (13) présentent à leurs extrémités des trous alignés à travers lesquels les câbles (11, 12) sont enfilés, en retenant ainsi les barres transversales par paires.

15. Tuyau ondulé selon la revendication 14, caractérisé en ce que les barres transversales (13) sont faites de tôles minces et plates.

16. Tuyau ondulé selon la revendication 15, caractérisé en ce que l'épaisseur des barres transversales (13) est comprise entre 0,1 et 1,0 mm et est de préférence inférieure à 0,5 mm.

17. Tuyau ondulé selon la revendication 14, caractérisé en ce que les trous des barres transversales sont constitués par des trous allongés orientés radialement.

18. Tuyau ondulé selon une des revendications 11 à 13, caractérisé en ce que les câbles (35, 36) sont en appui radialement vers l'extérieur contre le profil intérieur du tuyau ondulé (33).

19. Tuyau condulé selon une des revendications 11 à 13, caractérisé en ce que des intercalaires sont interposés entre les câbles et la paroi du tuyau ondulé pour établir un écartement radial.

20. Tuyau ondulé selon la revendication 19, caractérisé en ce que les intercalaires sont formés par les barres transversales.

21. Tuyau ondulé selon la revendication 2, 4 ou 5, caractérisé en ce que les entretoises sont des anneaux extérieurement cylindriques dont le profil extérieur est de préférence légèrement plus petit que le profile intérieur du tuyau ondulé et en ce que les anneaux sont montés sur le câble ou sur les câbles à un certain écartement mutuel et dans des dispositions bloquées à l'encontre de la translation axiale.

22. Tuyau ondulé selon la revendication 21, caractérisé en ce que l'écartement mutuel des anneaux est bloqué par des intercalaires ou équivalents agencés sur le câble ou les câbles entre les anneaux.

23. tuyau ondulé selon la revendication 3, 4 ou 5, caractérisé en ce que, dans le cas de deux ou plus de deux câbles (4, 5; 15, 16; 20, 21; 24 à 27; 52, 76, 79, 86, 91, 92, 102, 122 à 125) disposés à l'extérieur du tuyau (1, 14, 18, 23, 51, 74, 90, 100, 116), les entretoises (3, 17, 19, 22, 28, 53, 58, 64, 67, 70, 93, 104, 110) sont constituées par des anneaux ou des segments d'anneaux qui entourent le tuyau ondulé et les câbles en établissant une disposition imperdable.

24. Tuyau ondulé selon la revendication 3, caractérisé en ce que les anneaux ou segments d'anneau sont emboîtés dans ou sur les ondes du tuyau ondulé, dans une disposition bloquée à l'encontre de la translation dans la direction axiale du tuyau ondulé.

25. Tuyau ondulé selon la revendication 23 ou 24, caractérisé en ce que les anneaux ou segments d'anneaux sont d'une constitution autoporteuse (rigide).

26. Tuyau ondulé selon la revendication 25, caractérisé en ce que les segments d'anneaux (106, 107) présentent à leurs extrémités des trous alignés (109) à travers lesquels les câbles (102) sont enfilés, en maintenant ainsi les segments d'anneaux par paires.

27. Tuyau ondulé selon la revendication 26, caractérisé en ce que les trous sont constitués par des trous allongés orientés radialement.

28. Tuyau ondulé selon la revendication 23 ou 24, caractérisé en ce que les anneaux ou segments d'anneaux sont constitués par des moyens d'enveloppement souples (19).

29. Tuyau ondulé selon une des revendications 23 à 28, caractérisé en ce que des intercalaires (22) sont interposés entre les câbles (20, 21) et le tuyau ondulé (19) pour établir un écartement radial.

30. Tuyau ondulé selon la revendication 29, caractérisé en ce que les intercalaires sont formés par les anneaux (3, 17, 28, 53, 58, 64, 67, 70) ou par des segments d'anneaux.

31. Tuyau ondulé selon la revendication 23, caractérisé en ce que, dans le cas de deux câbles (91, 92), les anneaux (93) ou segments d'anneaux sont intérieurement cylindriques, leur profil intérieur (97) étant de préférence légèrement plus grand que le profil extérieur du tuyau ondulé (90) et en ce que les anneaux ou segments d'anneaux sont montés sur les câbles à un certain écartement mutuel (95) et dans des dispositions bloquées à l'encontre de la translation axiale.

32. Tuyau ondulé selon la revendication 31, caractérisé en ce que l'écartement mutuel des anneaux (93) ou segments d'anneaux est bloqué par des intercalaires (96) ou équivalents agencés sur les câbles entre les anneaux ou segments d'anneaux.

33. Tuyau ondulé selon une des revendications 23 à 32, caractérisé en ce que les extrémités adjacentes (54, 55, 59, 60, 62, 63) des segments d'anneaux (53, 58, 64, 67, 70) associés l'un à l'autre sont assemblées entre elles par soudage, liaison par sûreté de forme, pinces emboîtées (65, 72) ou par des procédés d'assemblage équivalents.

34. Tuyau ondulé selon une des revendications 23 à 26, caractérisé en ce que les anneaux (28, 104, 110) ou les segments d'anneaux (106, 107) présentent la forme de disques.

35. Tuyau ondulé selon la revendication 34, caractérisé en ce que les anneaux (28, 104, 110) ou les segments d'anneaux (106, 107) sont faits de tôles minces, planes.

36. Tuyau ondulé selon la revendication 35, caractérisé en ce que l'épaisseur des anneaux (28, 104, 110) ou segments d'anneaux (106, 107) est comprise entre 0,1 et 1,0 mm, de préférence inférieure à 0,5 mm.

37. Tuyau ondulé selon une des revendications 23, 24, 25 ou 28, caractérisé en ce que les anneaux (3, 17, 53, 58, 64, 67, 70) ou les segments d'anneaux sont faits de fil métallique ou équivalent de section circulaire.

38. Tuyau ondulé selon la revendication 23, caractérisé en ce que au milieu entre les anneaux (28) adjacents ou segments d'anneaux adjacents, considérés dans la direction axiale du tuyau ondulé (23), sont disposés d'autres éléments de retenue (29, 29a) présentant la forme d'anneaux ou de segments d'anneaux, en ce que ces éléments de retenue entourent en tiennent les câbles (24, 26 ou 25, 27) diamètralement opposés entre eux par rapport à l'axe (30) du tuyau ondulé, à un écartement radiale de l'axe (30) du tuyau qui est supérieur à celui des anneaux (28) ou des segments d'anneaux, en ce que le profil intérieur (en 31) des éléments de retenue (29, 29a) présente un certain écartement par rapport à la paroi radialement adjacente du tuyau ondulé et en ce que les éléments de retenue sont bloqués à l'encontre du déplacement dans la direction de l'axe du tuyau ondulé.

39. Tuyau ondulé selon 38, caractérisé en ce, dans le cas de quatre câbles (24 à 27), il est prévu des paires d'éléments de retenue (29, 29a) dont un élément de retenue (29 ou 29a) entoure et tient des câbles (24, 26 ou 25, 27) qui sont décalés de 90° par rapport à ceux de l'autre élément de retenue (29a ou 29) et en ce que chaque élément de retenue est librement mobile, dans la direction radiale vis-à-vis de l'axe (30) du tuyau ondulé, par rapport aux câbles qui ne sont pas tenus par cet élément.

40. Tuyau ondulé selon une des revendications précédentes, caractérisé en ce que les entretoises ou les éléments de retenue sont assemblés rigidement aux câbles.

41. Tuyau ondulé selon la revendication 38, caractérisé en ce que les éléments de retenue (29, 29a) sont enfoncés partiellement dans un creux d'onde adjacent du tuyau ondulé (23).

42. Tuyau ondulé selon une des revendications 38 à 41, caractérisé en ce que les éléments de retenu (29, 29a) présentent la forme de disques.

43. Tuyau ondulé selon une des revendications précédentes, caractérisé en ce que les entretoises prévues pour chaques tuyau ondulé sont prévues à des distances d'écartement plus grandes, régulières ou irrégulières.

44. Tuyau ondulé selon une des revendications précédentes, caractérisé en ce que les entretoises (110) sont munies d'intercalaires (113) sur le côté de traction et le côté de compression de la flexion du tuyau ondulé.

45. Tuyau ondulé selon une des revendications précédentes, caractérisé en ce que les câbles (86) sont fixés aux organes de raccordement (73, 83) du tuyau par des liaisons démontables et éventuellement réglables relativement à leur longueur.

46. Tuyua ondulé selon une des revendications précédentes, caractérisé en ce que les câbles (76, 79) sont fixés aux organes de raccordement (75, 80) du tuyau ondulé de façon à pouvoir osciller, du moins dans certaines limites.

47. Tuyau ondulé selon une des revendications précédentes, caractérisé en ce que les câbles traversent les entretoises avec interposition de douilles ou équivalents enfilées sur ces câbles.

**Claims**

1. Flexible corrugated hose with mutually parallel annular corrugations, terminal connection parts and longitudinal support means holding these latter against axial variation of distance and firmly connected with the connection parts in the tension and/or compression direction, against which support means the corrugated hose is at least indirectly supported, characterised in that the longitudinal support means is at least one flexible cable (4, 5; 11, 12; 15, 16; 20, 21; 24 to 27; 35, 36; 39, 52, 76, 79, 86, 91, 92, 102, 122 to 125) extending substantially parallel to the corrugated hose (1, 8, 14, 18, 23, 33, 38, 51, 74, 90, 100, 116), in that the radial relative position between corrugated hose and cable is given by spacing members (3, 13, 17, 19, 28, 37, 41, 53, 58, 64, 67, 70, 93, 104, 110) grasping the cable and arranged in distribution at intervals over the length of the corrugated hose, and in that the corrugated hose is guided in the radial direction by the cable.

2. Corrugated hose according to Claim 1, characterised in that in the case of one cable (39) this is arranged concentrically with the axis of the corrugated hose.

3. Corrugated hose according to Claim 1, characterised in that in the case of a plurality of cables (4, 5; 11, 12; 15, 16; 20, 21; 24 to 27; 35, 36; 52, 76, 79, 86, 91, 92, 102, 122 to 125) these are arranged symmetrically in distribution around the axis of the corrugated hose.

4. Corrugated hose according to Claim 3, characterised in that in the case of two cables (4, 5; 11, 12; 15, 16; 20, 21; 35, 36; 91, 92, 102, 122 to 125) these are arranged in the neutral bending plane (7, 10, 23, 34, 98) of the corrugated hose (1, 8, 14, 18, 33, 90, 100).

5. Corrugated hose according to Claim 3 or 4, characterised in that the cables (122 to 125) are divided over the length of the corrugated hose into at least two equal or unequal sections (117 to 120) and in that the cables of adjacent sections are secured to a common outer ring (121) surrounding the hose (116) possibly with play (d).

6. Corrugated hose according to Claim 5, characterised in that the cables (122 to 125) of adjacent sections (117 to 120) are arranged offset in relation to one another in the circumferential direction of the corrugated hose (116).

7. Corrugated hose according to Claim 6, characterised in that the cables (122 to 125) are offset by 90° in relation to one another.

8. Corrugated hose according to Claim 2, characterised in that the distance members (41) are transverse webs (41), cross-pieces or the like grasping the cable (39) by their middle, inserted into the corrugations of the corrugated hoses and/ or set upon these corrugations in a manner secured against displacement in the axial direction of the corrugated hose (38).

9. Corrugated hose according to Claim 8, characterised in that the transverse webs (41) extend substantially between two mutually diametrically opposite zones (at 42, 43) of the corrugated hose (38) and in that transverse webs adjacent to one another in the longitudinal direction of the corrugated hose are arranged at an angular displacement of 90° in relation to one another.

10. Corrugated hose according to Claim 9, characterised in that the transverse webs (41) grasp the cable (39) leaving a clearance.

11. Corrugated hose according to Claim 3, 4 or 5, characterised in that in the case of two or more cables (11, 12; 35, 36) arranged within the corrugated hose transverse webs (13, 37) as distance pieces are arranged to engage with their ends between the cables and secured against displacement in the axial direction.

12. Corrugated hose according to Claim 11, characterised in that the transverse webs (37) extend diametrically through the cross-section of the corrugated hose.

13. Corrugated hose according to Claim 11, characterised in that the transverse webs (13) are made in semi-arcuate form and are inserted into or set upon the corrugated hose so as to be secured against displacement in the axial direction of the corrugated hose (8).

14. Corrugated hose according to Claim 13, characterised in that the transverse webs (13) have aligned bores at their ends, through which the cables (11, 12) are drawn so as to hold the transverse webs by pairs.

15. Corrugated hose according to Claim 14, characterised in that the transverse webs (13) consist of thin, plane metal sheets.

16. Corrugated hose according to Claim 15, characterised in that the thickness of the transverse webs (13) lies between 0.1 and 1.0 mm, preferably below 0.5 mm.

17. Corrugated hose according to Claim 14, characterised in that the bores of the transverse webs are formed as radially directed slots.

18. Corrugated hose according to one of Claims 11 to 13, characterised in that the cables (35, 36) are radially outwardly in abutment against the internal contour of the corrugated hose (33).

19. Corrugated hose according to one of Claims 11 to 13, characterised in that distance pieces for radial spacing are inserted between cables and corrugated hose wall.

20. Corrugated hose according to Claim 19, characterised in that the distance pieces are formed by the transverse webs.

21. Corrugated hose according to Claim 2, 4 or 5, characterised in that the spacing members are externally cylindrical rings the outer contour of which is preferably slightly smaller than the internal contour of the corrugated hose, and in that the rings are set with mutual spacing, secured against axial displacement, upon the cable or cables.

22. Corrugated hose according to Claim 21, characterised in that the mutual spacing of the rings is secured by distance pieces or the like arranged on the cable or cables between the rings.

23. Corrugated hose according to Claim 3, 4 or 5, characterised in that in the case of two or more cables (4, 5; 15, 16; 20, 21; 24 to 27; 52, 76, 79, 86, 91, 92, 102, 122 to 125) arranged outside the hose (1, 14, 18, 23, 51, 74, 90, 100, 116) the spacing members (3, 17, 19, 22, 28, 53, 58, 64, 67, 70, 93, 104, 110) are formed as rings or ring segments captively grasping the corrugated hose and the cables.

24. Corrugated hose according to Claim 23, characterised in that the rings or ring segments are inserted into the corrugations of the corrugated hose or are set upon these so as to be secured against displacement in the axial direction of the corrugated hose.

25. Corrugated hose according to Claim 23 or 24, characterised in that the rings or ring segments are made self-supporting (rigid).

26. Corrugated hose according to Claim 25, characterised in that the ring segments (106, 107) have aligned bores (109) at their ends through which the cables (102) are drawn, holding the ring segments by pairs.

27. Corrugated hose according to Claim 26, characterised in that the bores are formed as radially directed slots.

28. Corrugated hose according to Claim 23 or 24, characterised in that the rings or ring segments are formed as slack looping means (19).

29. Corrugated hose according to one of Claims 23 to 28, characterised in that distance pieces (22) for radial distance formation are inserted between cables (20, 21) and corrugated hose (18).

30. Corrugated hose according to Claim 29, characterised in that the distance pieces are formed by the rings (3, 17, 28, 53, 58, 64, 67, 70) or ring segments.

31. Corrugated hose according to Claim 23, characterised in that in the case of two cables (91, 92) the rings (93) or ring segments are internally cylindrical, their internal contour (97) being preferably slightly larger than the external contour of the corrugated hose (90), and in that the rings or ring segments are set upon the cables with mutual spacing (95), so as to be secured against axial displacement.

32. Corrugated hose according to Claim 31, characterised in that the mutual spacing of the rings (93) or ring segments is secured by distance pieces (96) or the like arranged on the cables between the rings or ring segments.

33. Corrugated hose according to one of Claims 23 to 32, characterised in that adjacent ends (54, 55, 59, 60, 62, 63) of mutually associated ring segments (53, 58, 64, 67, 70) are connected with one another by welding, dovetail engagement, attached clip pieces (65, 72) or the like joining methods.

34. Corrugated hose according to one of Claims 23 to 26, characterised in that the rings (28, 104, 110) or ring segments (106, 107) are made in disc form.

35. Corrugated hose according to Claim 34, characterised in that the rings (28, 104, 110) or ring segments (106, 107) consist of thin, flat metal plates.

36. Corrugated hose according to Claim 35, characterised in that the thickness of the rings (28, 104, 110) or ring segments (106, 107) lies between 0.1 and 1.0 mm, preferably below 0.5 mm.

37. Corrugated hose according to one of Claims 23, 24, 25 or 28, characterised in that the rings (3, 17, 53, 58, 64, 67, 70) or ring segments are formed by wire or the like with circular cross-section.

38. Corrugated hose according to Claim 23, characterised in that in the axial direction of the corrugated hose (23) centrally between adjacent rings (28) or ring segments there are arranged further retaining elements (29, 29a) of ring or ring segment form, in that these grasp round and hold cables (24, 26 and 25, 27) lying diametrically oppositely to one another in relation to the axis (30) of the corrugated hose, at a greater radial distance from the hose axis (30) compared with the rings (28) or ring segments, in that the internal contour (at 31) of the retaining elements (29, 29a) has a spacing from the radially adjacent corrugated hose wall, and in that the retaining elements are secured against movement in the axial direction of the corrugated hose.

39. Corrugated hose according to Claim 38, characterised in that in the case of four cables (24 to 27), retaining element pairs (29, 29a) are provided of which one retaining element (29 or 29a) grasps and holds cables (24, 26 or 25, 27) offset by 90° in relation to the other (29a or 29), and in that each retaining element is freely movable radially of the corrugated hose axis (30) in relation to the cables not grasped by the retaining element.

40. Corrugated hose according to one of the preceding claims, characterised in that the spacing members or the retaining elements are firmly connected with the cables.

41. Corrugated hose according to Claim 38, characterised in that the retaining elements (29, 29a) are partially dipped into a radially adjacent corrugation trough of the corrugated hose (23).

42. Corrugated hose according to one of Claims 38 to 41, characterised in that the retaining elements (29, 29a) are made in disc form.

43. Corrugated hose according to one of the preceding claims, characterised in that the spacing members are provided for each corrugated hose or at larger, regular or irregular intervals.

44. Corrugated hose according to one of the preceding claims, characterised in that the spacing members (110) on the tension and compression sides of the corrugated hose curvature are provided with distance members (113).

45. Corrugated hose according to one of the preceding claims, characterised in that the cables (86) are secured to the hose connection parts (73, 83) detachably and possibly adjustably as regards their length.

46. Corrugated hose according to one of the preceding claims, characterised in that the cables (76, 79) are secured at least limitedly pivotably to the corrugated hose connection parts (75, 80).

47. Corrugated hose according to one of the preceding claims, characterised in that the cables cross through the spacing members by way of set-on sleeves or the like.

Fig. 1

Fig. 2

1

Fig. 3

Fig. 4

2

Fig. 5

EP 0 210 271 B1

Fig. 6

Fig. 7

4

Fig. 8

Fig. 9

Fig. 10

52

51

66

68

67

Fig. 11

72

52

51

69

71

70

Fig. 12

Fig. 13

Fig. 14

Fig. 15

7

Fig. 9Y

Fig. 21

Fig. 17

Fig. 19

Fig. 20

Fig. 18

Fig. 22

Fig. 23